# EUROPEAN PATENT APPLICATION

(11) **EP 3 139 240 A1**
(43) Date of publication of application: **08.03.2017**
(21) Application number: 16181595.6
(22) Date of filing: 28.07.2016
(51) Int. Cl.: G05D 23/19, F24D 19/10, F24F 11/00, H01R 9/22, H01R 13/22, H01R 25/14

(54) **MODULAR TRACK WIRING ASSEMBLY FOR A HYDRONIC SYSTEM**

(30) Priority: 28.07.2015 US 201514811553; 29.04.2016 CA 2928430
(71) Applicant: B2 Products Ltd., Victoria, BC V8P 2P6 (CA)
(72) Inventor: O'CONNOR, Brendan A., Victoria, BC V8S 4G3 (CA); BUNT, Brad, Victoria, BC V8Y 1S8 (CA)
(74) Representative: Sonn & Partner Patentanwälte

(57) **Abstract**

There is provided a hydronic system for a plurality of zones. The system includes a wiring track. The track has a pair of power conductors for supplying electrical energy therealong and a pair of signal conductors. The signal conductors are in communication with a heat/cold source. The system includes a plurality of zone modules, each corresponding to a respective one of the zones. Each of the zone modules includes leads which connect to respective ones of the conductors. Each of the zone modules includes terminals and conductors configured to selectively connect respective thermostats and zone valves of their zone together, receives signals therefrom and conveys the signals via the signal conductors to the heat/cold source for selectively heating/cooling respective ones of the zones.

## Description

### BACKGROUND OF THE INVENTION

### Field of the Invention

There is provided a modular track wiring assembly. In particular, there is provided a modular track wiring assembly for a hydronic system.

### Description of the Related Art

Multi-zone hydronic systems may include a number of interrelated components: a source of heat (typically a boiler), circulation pumps to move water around the system, and heat output emitters (e.g. radiators, radiant heating panels, fan coil units), zone control valves and thermal or mechanical controls (e.g. thermostats, aquastats, switches). A complete system will usually be made up of one or more heat sources, one or more circulation pumps and a number of heat output devices and emitters located at various locations where heat is needed throughout the building.

To maintain desired space temperatures, a plurality of thermostats are often installed. Each thermostat works to turn on and off the flow of hot water through one or more of the heat output emitters within its zone of control. If a zone calls for heat, two events typically must happen: 1) the correct zone valve must open in the hot water heating loop; and 2) the correct hot water circulation pump must start and drive hot water around the piping system. To accomplish this, each zone control valve is equipped with a built in end switch that is wired through a series of interconnections to the circulation pump and ultimately the heat source.

These systems typically operate on 24V AC control voltage and they are typically wired by installers who have training in such systems. To wire multi-zone hydronic systems together in an error-free manner requires that the installer wire together a multitude of electrical devices: zone thermostats, zone hot water control valves including corresponding end switches, and one or more circulation pumps, for example. These components are wired into the system's low voltage transformer and also the building's electrical system. In addition to this, there are electrical controls on each heat source (such as the boiler, water heater etc.) to maintain correct use temperatures thereof. The complexity and non-uniformity of existing control systems may lead to wiring errors and poor electrical connections that can result in the need for post-installation service. Such servicing may be very difficult because poor installations are often disorganized and troubleshooting thus may be challenging.

In view of the above, there may accordingly be a need for an improved means for connecting together the various components of hydronic systems.

### BRIEF SUMMARY OF INVENTION

There is accordingly provided a modular track wiring assembly for hydronic systems disclosed herein that may overcome the above disadvantages.

There is thus provided a modular track wiring assembly for a hydronic system. A first zone of the system includes a temperature-sensing device which outputs a valve-actuation signal upon the zone temperature deviating from a threshold temperature range. The system includes a zone valve having an end switch which outputs a call for heat/cold signal when the zone valve is fully open. The assembly includes an elongate track. The track has a pair of power conductors extending therealong. The power conductors are configured to supply electrical energy. The track has a pair of signal conductors extending therealong. The signal conductors are configured to convey signals therealong. The assembly includes a zone module connectable to and receiving electrical energy from the track. The zone module connects the temperature-sensing device to the zone valve such that the zone valve is powered to open upon receiving the valve-actuation signal. The zone module connects the end switch to the signal conductors for conveying a call for heat/cold signal therealong when the zone valve is fully open.

According to another aspect, there is provided a hydronic system for a plurality of zones. The system includes a wiring track. The track has a pair of power conductors for supplying electrical energy therealong and a pair of signal conductors. The signal conductors are in communication with a heat/cold source. The system includes a plurality of zone modules, each corresponding to a respective one of the zones. Each of the zone modules includes leads which connect to respective ones of the conductors. Each of the zone modules includes terminals and conductors configured to selectively connect respective thermostats and zone valves of their zone together, receives signals therefrom and conveys said signals via the signal conductors to the heat/cold source for selectively heating/cooling respective ones of said zones.

According a further aspect, there is provided a modular track for a hydronic system. The track is elongate and planar. The track includes a pair of spaced-apart power conductors for supplying electrical energy therealong. The power conductors are connectable to an electrical power source. The track includes a pair of signal conductors configured to receive mechanical or thermal control signals from a plurality of zones and convey the signals to a heat/cold source actuator.

There is also provided a hydronic system for a plurality of zones. The system includes a wiring track. The track includes a pair of power conductors supplying electrical energy therealong and a pair of signal conductors. The signal conductors are in communication with a heat/cold source. The system includes a means for electrically coupling thermostats and zone valves of the respective one of the zones together for selectively heating/cooling said respective ones of said zones.

### BRIEF DESCRIPTION OF DRAWINGS

The invention will be more readily understood from the following description of preferred embodiments thereof given, by way of example only, with reference to the accompanying drawings, in which:
Figure 1 is a schematic view of a hydronic system according to one aspect, with heating wiring circuits not being shown for clarity;
Figure 2A to 2D are an example of a schematic wiring diagram for the hydronic system of Figure 1, the system including a plurality of modular tracks and a plurality of modules connected thereto;
Figure 3 is a front, top perspective, partially fragmented view of one of the modular tracks of Figures 2A to 2D together with a series of modules connected thereto, the track and the modules being enclosed within a housing having a cover that is partially open;
Figure 4 is a front, top perspective view of the track and modules of Figure 3, with the housing not being shown, the modules including a transformer module and a plurality of zone modules;
Figure 5 is a front, side perspective view of the transformer module of Figure 4 in the process of being connected to the track of Figure 4;
Figure 6 is an end elevation view of the transformer module of Figure 4 shown coupled to the track of Figure 4;
Figure 7 is an exploded perspective view of the transformer module of Figure 4, the module including a cover that is spaced-apart from the rest of the module to reveal interior contents thereof and the module including an outlet plug;
Figure 8 is an end elevation view of one of the zone modules of Figure 4 shown coupled to the track of Figure 4;
Figure 9 is a front plan view of the zone module of Figure 8;
Figure 10 is an internal schematic wiring diagram of one of the power modules of the hydronic system of Figures 2A to 2D;
Figure 11 is a schematic wiring diagram of the power modules of the hydronic system of Figures 2A to 2D illustrating an example of how the conductors of the respective ones of the tracks of the hydronic system are coupled together via the power modules, including how electrical energy from the transformer module on a primary track of the hydronic system is distributed via the power modules to remote tracks of the hydronic system;
Figure 12 is an internal schematic wiring diagram of one of the zone modules of the hydronic system of Figures 2A to 2D;
Figure 13 is a schematic wiring diagram of a plurality of the zone modules of Figures 2A to 2D, a first shown coupling a thermostat to a zone valve in a first zone, a second shown coupling a thermostat to an external relay in a second zone, and a third shown coupling an aquastat to a zone valve in a third zone;
Figure 14 is an internal schematic wiring diagram of one of the relay modules of the hydronic system of Figures 2A to 2D;
Figure 15 is part of the schematic wiring diagram of the hydronic system of Figures 2A to 2D showing an example of the manner in which the relay module of Figure 14 couples to the rest of the system;
Figure 16 is an internal schematic wiring diagram of a pump module for the hydronic system of Figures 2A to 2D;
Figure 17 is a schematic wiring diagram showing examples of how the pump modules of Figure 16 may couple to the rest of the system of Figure 1;
Figure 18 is a schematic wiring diagram showing other examples of how the pump modules of Figure 16 may couple to the rest of the system of Figure 1;
Figure 19 is an internal schematic wiring diagram of a two-stage zone module of the hydronic system of Figures 2A to 2D;
Figure 20 is a schematic wiring diagram showing an example of how the two-stage zone module of Figure 19 may couple to the rest of the system of Figure 1;
Figure 21 is a schematic wiring diagram showing another example of how the two-stage zone module of Figure 19 may couple to the rest of the system of Figures 2A to 2D;
Figure 22 is an internal schematic wiring diagram of a priority relay module of the hydronic system of Figures 2A to 2D;
Figure 23 is a schematic wiring diagram showing an example of how the priority relay module of Figure 22 may couple to the rest of the system of Figure 1;
Figure 24 is a schematic wiring diagram showing another example of how the priority relay module of Figure 22 may couple to the rest of the system of Figure 1;
Figure 25 is an internal schematic wiring diagram of a heat/cool module for the hydronic system of Figure 1;
Figure 26 is a schematic wiring diagram showing an example of how the heat/cool module of Figure 25 may couple to the rest of the system of Figure 1;
Figure 27 is a schematic wiring diagram showing an example of how power modules and transformer modules on a plurality of tracks may couple together according to a variation to the wiring of the hydronic system of Figures 2A to 2D;
Figure 28 is a bottom, side perspective view of a power module of a modular track wiring assembly for a hydronic system according to a third aspect;
Figure 29 is a top perspective view of a pair of tracks of the modular track wiring assembly of Figure 28 with the power module of Figure 28 coupling the tracks together;
Figure 30 is an internal schematic wiring diagram of a power module according for a hydronic system according to a fourth embodiment;
Figure 31 is a schematic wiring diagram of the power modules of Figure 30 illustrating an example of how the conductors of the respective ones of the tracks of the hydronic system are coupled together via the power modules, including how electrical energy from the transformer module on a primary track of the hydronic system is distributed via the power modules to remote tracks of the hydronic system;
Figure 32 is an internal schematic wiring diagram of a pump module for a hydronic system according to a fifth embodiment;
Figure 33 is a schematic wiring diagram showing examples of how the pump modules of Figure 32 may couple to the rest of the hydronic system; and
Figure 34 is a schematic wiring diagram showing further examples of how the pump modules of Figure 32 may couple to the rest of the hydronic system for a multiple temperature application;
Figure 35 is a schematic wiring diagram showing a further example of how the two-stage zone module of Figure 19 may couple to the rest of the system of Figures 2A to 2D using the pump module of Figure 32; and
Figure 36 is a schematic wiring diagram showing a yet further example of how the two-stage zone module of Figure 19 may couple to the rest of the system of Figures 2A to 2D using the pump module of Figure 32.

### DESCRIPTION OF THE PREFERRED EMBODIMENTS

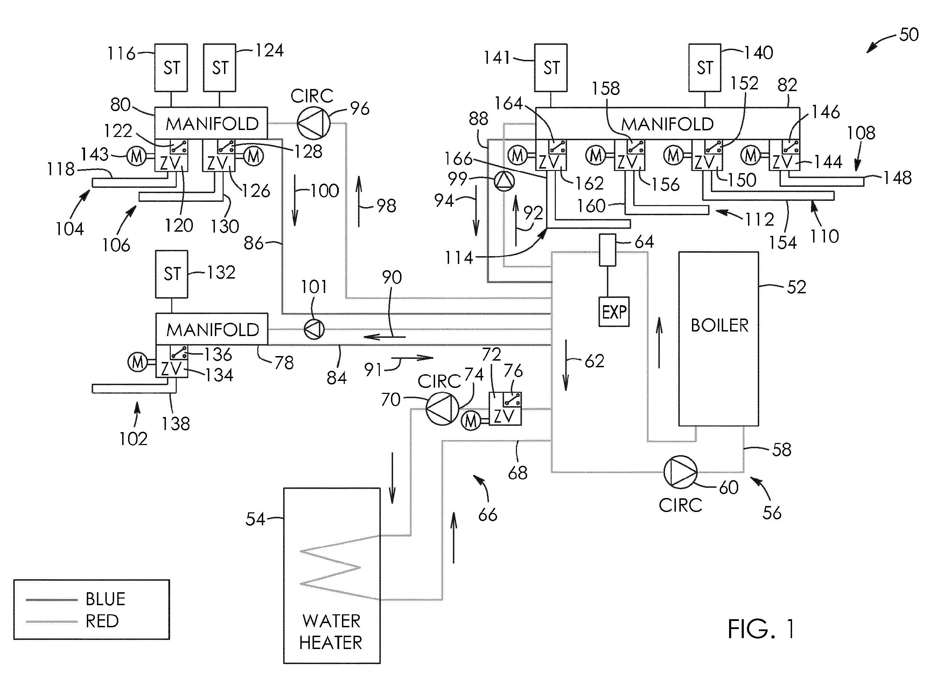

Referring to the drawings and first to Figure 1, there is shown a schematic view of a multi-zone hydronic system 50 according to one aspect, with the wiring circuits not being shown.

The system includes a central fluid circuit 56 comprising a central fluid loop, in this example a central water loop 58 through which water may be circulated. The central water loop is in communication with the boiler 52 for selectively heating the fluid therein. The central fluid circuit 56 includes a circulation pump 60. The pump when activated circulates fluid into and out of the boiler 52 for heating said fluid. This is generally shown by arrow of numeral 62. The central fluid circuit 56 includes an air separator 64 configured to remove air from the central water loop 58.

Water for domestic use is heated indirectly via a coil inside a fluid heater in the form of a water heater 54 in this example. The hydronic system 50 includes a water heater fluid circuit 66. The water heater fluid circuit includes an auxiliary fluid loop, in this example in the form of a water loop 68 through which water may selectively circulate. Water loop 68 is in fluid communication with and extends outwards from central water loop 58. The water heater fluid circuit 66 includes a circulation pump 70. The pump when activated circulates fluid into and out of the coil in water heater 54 for selectively heating the fluid therein.

The water heater fluid circuit 66 further includes a zone valve 72 between the inlet 74 of the pump 70 and water loop 58. The pump and zone valve are thus aligned in series along loop 58 in this example. The hydronic system 50 includes an end switch 76 operatively connected to the zone valve 72. The end switch is configured to output a signal upon determining that the valve is fully open.

The hydronic system 50 includes a plurality of manifolds 78, 80 and 82. The hydronic system further includes a plurality of additional auxiliary fluid loops, in this example water loops 84, 86 and 88 in communication with and coupling together the respective ones of the manifolds 78, 80, and 82 with the central water loop 58. Each of the loops is configured to enable water to circulate therewithin. In this example the system 50 includes an additional circulation pump 96 associated with loop 86. The pump is configured to aid circulation of fluid heated from the boiler 52 within loop 86. This is generally shown by arrows of numerals 98 and 100.

The system 50 in this example includes a further circulating pump 99 associated with loop 88. Pump 99 is configured to aid circulation of fluid heated from the boiler 52 within loop 88. This is generally shown by arrows of numerals 92 and 94. The hydronic system 50 in this example includes another circulating pump 101 associated with loop 84. Pump 101 is configured to aid circulation of fluid heated from the boiler 52 within loop 84. This is generally shown by arrows of numerals 90 and 91.

The hydronic system 50 includes a plurality of zones 102, 104, 106, 108, 110, 112 and 114 of a building (not shown) to be heated/cooled. Each of the zones includes a temperate-sensing device associated with it which determines when heat/cold is needed, a zone fluid loop in fluid communication with its respective manifold, a zone valve interposed between the zone fluid loop and manifold, and an end switch associated with the zone valve and which sends a signal when the zone valve is fully open. This is shown for example by thermostat 116, zone fluid loop 118, zone valve 120, and end switch 122 for zone 104 and manifold 80. Similarly, thermostat 124, zone valve 126, end switch 128, and zone fluid loop 130 are associated with zone 106 and manifold 80. Thermostats/aquastats as herein described may be referred to as temperature set-point switches which close upon a zone temperature reaching above or below a certain threshold temperature as desired.

Thermostat 132 is a two-stage thermostat in this example and is associated with zone valve 134, end switch 136 and zone fluid loop 138 of zone 102 and is associated with manifold 78.

Thermostat 140 is configured to be shared by zones 108 and 110 in this example. Zone valve 144, end switch 146 and zone fluid loop 148 of zone 108 are associated with thermostat 140 and are associated with manifold 82. Zone valve 150, end switch 152 and zone fluid loop 154 of zone 110 are also thus associated with thermostat 140 and are associated with manifold 82.

Thermostat 141 is configured to be shared by zones 112 and 114 in this example. Zone valve 156, end switch 158 and zone fluid loop 160 of zone 112 are associated with thermostat 141 and are associated with manifold 82. Zone valve 162, end switch 164 and zone fluid loop 166 of zone 114 are thus also associated with thermostat 141 and are associated with manifold 82.

Each of the zone valves of the hydronic system 50 includes a zone valve motor configured to selectively open the valve upon receiving power thereto. This is shown in Figure 1 by zone valve motor 143 operatively connected to zone valve 120.

Zone valves, zone valve motors, end switches, thermostats, fluid loops, circulation pumps, water heaters and boilers per se, including their various parts and functionings, are known per se to those skilled in the art and therefore will not be described in further detail.

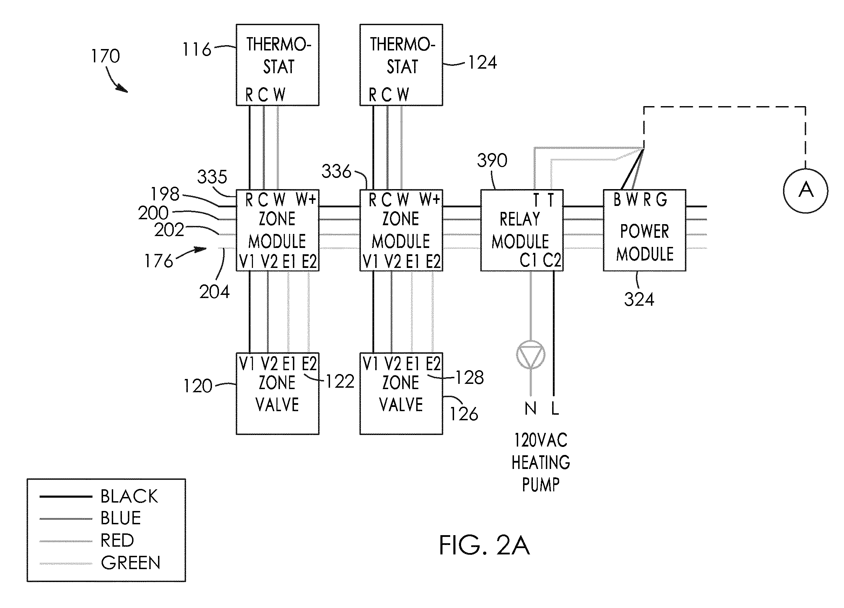

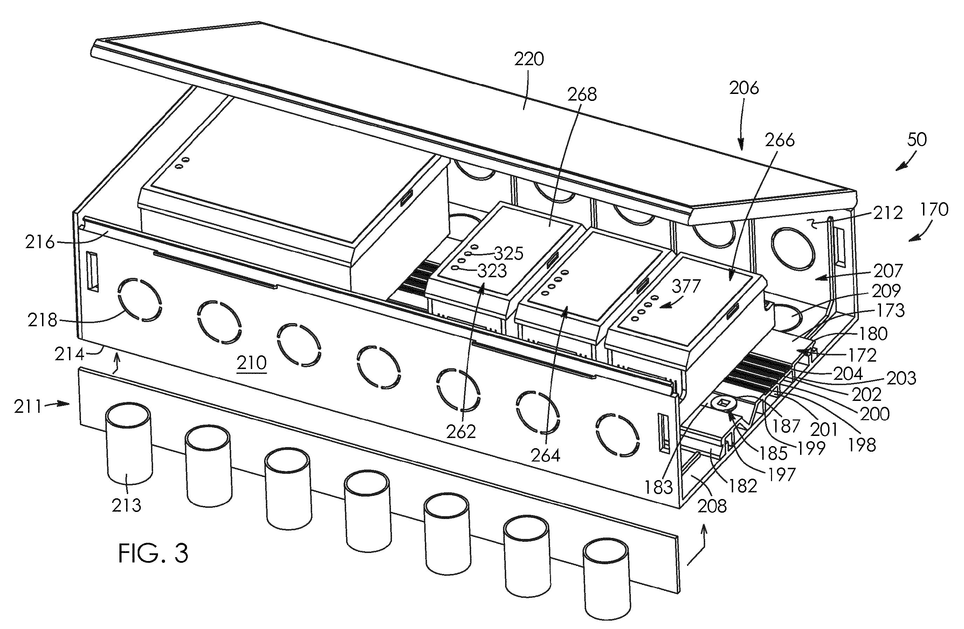

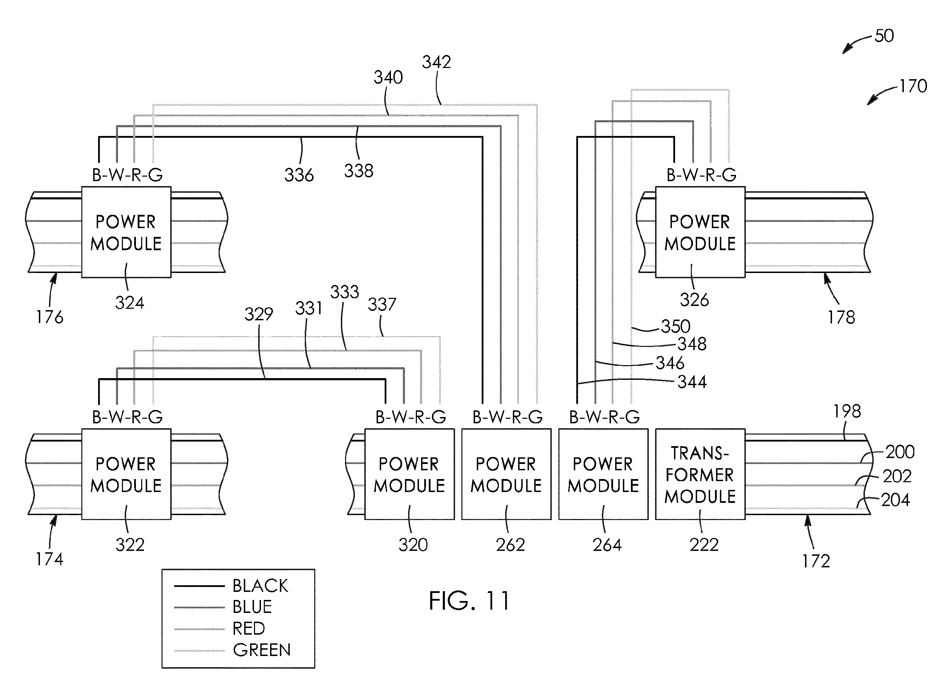

As seen in Figures 2A to 2D, the hydronic system 50 includes a modular track wiring assembly 170. As seen schematically in Figure 11, the modular track wiring assembly comprises a plurality of elongate tracks including a primary track 172 and a series of remote tracks, in this example tracks 174, 176 and 178. The primary track may be situated adjacent to the equipment location of a building, such as adjacent to boiler 52 seen in Figure 1 for example. The remote tracks 174, 176 and 178 may be added as necessary to auxiliary locations throughout the building, generally at locations of manifolds 78, 80 and 82, seen in Figure 1, for radiant floor heating, or central distribution points for example. Each of the tracks 172, 174, 176 and 178 is substantially the same in shape and parts and thus only track 172, best seen in Figures 3 to 6, will be described in detail.

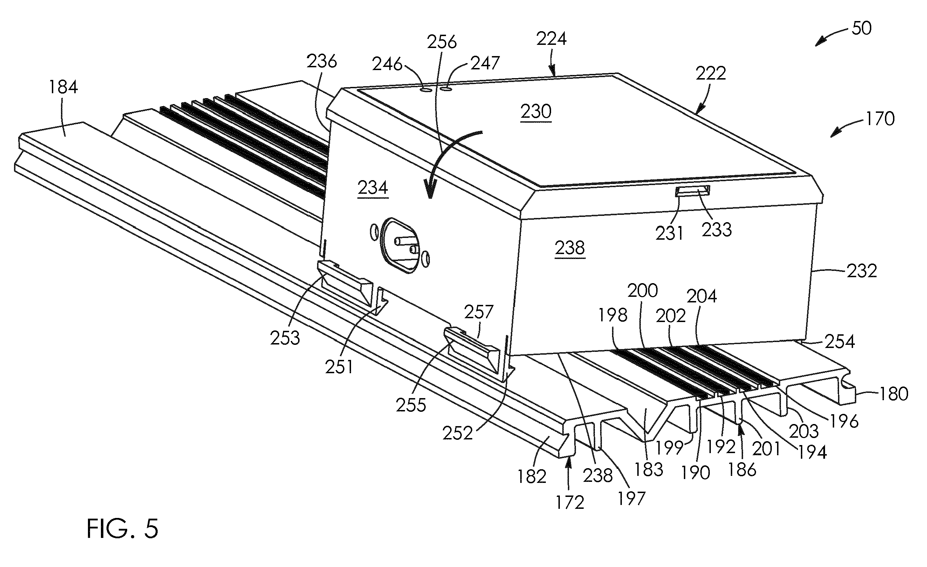

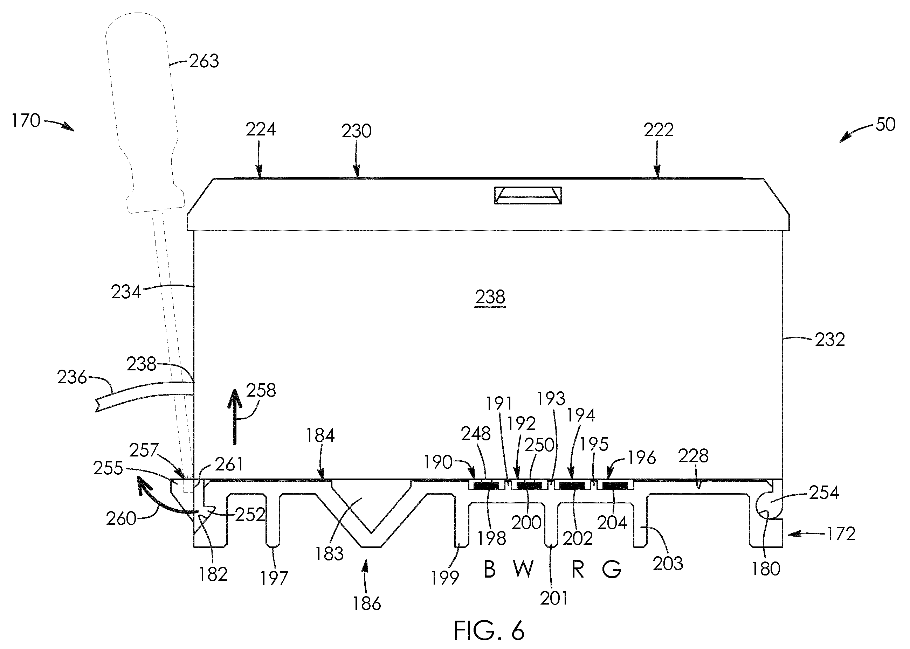

Referring first to Figure 3, each of the tracks 172 has a body 173 which is elongate, planar, generally rectangular in shape in this example, and is made of extruded plastic rail in this example. As seen in Figure 5, each track has a pair of spaced-apart, longitudinally-extending recessed edge portions 180 and 182 of different shapes which are non-symmetrical with each other. As seen in Figure 6, each edge portion 180 is in the shape of an elongate, rounded, recessed member which is outwardly concave in this example. Each edge portion 182 is triangular in cross-section in this example and shaped to receive a hook-shaped member for snap-fit connection.

As seen in Figure 5, each track 172 has a top 184 that is generally planar and a bottom 186 opposite the top. The top and bottom of the tracks 172 extend between the edge portions 180 and 182 thereof. Each of the tracks includes a plurality of spaced-apart and longitudinally-extending support flanges 197, 199, 201 and 203 which extend from the top 184 to the bottom 186 thereof. The support flanges are interposed between edge portions 180 and 182 of the tracks. Flanges 197 and 203 are positioned adjacent to edge portions 182 and 180, respectively, of the track in this example. Each of the support flanges 197, 199, 201 and 203 is a rectangular prism in shape in this example and functions to space the top 184 of the track 172 from the bottom 186 of the track.

As seen in Figure 5, each track 172 includes a longitudinally-extending fastener channel 183. Each fastener channel is interposed between support flanges 197 and 199 in this example, and extends from the top 184 to the bottom 186 of the track. As seen in Figure 3, the fastener channel is v-shaped in profile in this example and is shaped to receive a plurality of longitudinally spaced-apart fasteners, in this example flat-headed screws 185. The screws extend partially through the fastener channel 183 for threadably coupling to a wall or baseboard (not shown), with heads 187 of the screws abutting and being received by the fastener channel. In this manner, the tracks 172 are selectively connectable to the wall or baseboard.

As best seen in Figures 5 and 6, the tracks 172 include a plurality of longitudinally-extending conductor channels 190, 192, 194 and 196 which are adjacent to each other. The conductor channels are interposed between the edge portions 180 and 182 thereof and adjacent to support flanges 199, 201 and 203. In this example, the conductor channels 190, 192, 194 and 196 are positioned between support flanges 199 and 203. The conductor channels are u-shaped in cross-section in this example and extend downwards from the tops 184 of the tracks 172. Referring to Figure 6, conductor channels 190, 192, 194 and 196 are made of non-conducting material, in this example plastic. Each track includes a plurality of elongate strips 191, 193 and 195 interposed between the conductor channels 190, 192, 194 and 196, respectively. The strips are likewise made of non-conducting material, in this example plastic.

As seen in Figure 5, each of the tracks 172 comprises a plurality of spaced-apart, longitudinally-extending electrical conductors including: elongate power conductors 198 and 200 coupled to, extending along and being received within conductor channels 190 and 192, respectively; and a pair of spaced-apart, elongate signal conductors 202 and 204 coupled to, extending along and being receiving within conductor channels 194 and 196, respectively. The power conductors are configured to supply electrical energy to conductive components coupled thereto. The signal conductors 202 and 204 are configured to convey signals therealong.

Referring to Figure 6, standard four-conductor thermostat wire (18/4) typically comes in the colors black, white, red and green. It is common standard industry practice in Canada to use black and white wire colors for power applications, with power conductors 198 and 200 thus being labelled B and W in Figure 6. Standard industry practice in Canada is to use red and green wire colors for end switch or signal operations, with signal conductors 202 and 204 thus being labeled R and G in Figure 6.

Referring to Figure 3, the hydronic system 50 in this example includes a plurality of housings, one for each of the tracks, for selectively enclosing the modular track wiring assemblies 170. This is exemplified by housing 206 seen in Figure 3 which is generally in the shape of a hollow, rectangular prism in this example. Each housing has an interior 207 and a base 208 upon which a respective one of the tracks 172 may abut or couple. The base is rectangular in this example. Each housing 206 includes a plurality of longitudinally spaced-apart, removable push-out tabs extending along the base 208 thereof in this example, as shown by tab 209.

Each housing has a pair of spaced-apart sides 210 and 212 which are also rectangular in this example. The sides of the housing 206 have proximal ends 214 integrally connected to and extending from the base 208 of the housing and distal ends 216 spaced-apart from the proximal ends. Each housing 206 includes a plurality of longitudinally spaced-apart, removable push-out tabs extending along each of its sides, as shown by tab 218 for side 210 of the housing. Each housing includes a removable cover 220 that is rectangular in this example. The cover is shaped to selectively couple to the distal ends 216 of the sides 210 and 212 of thereof. Base 208, sides 210 and 212 and cover 220 of the housing 206 form enclosure for at least partially enclosing respective ones of the tracks 172 as well components connected thereon.

As seen in Figure 3, the hydronic system 50 may include a wire guide 211. The wire guide includes a mount 213 which is rectangular and plate-like in shape in this example. The wire guide 211 includes a plurality of spaced-apart sleeves 215 coupled to the mount. Each sleeve is cylindrical in shape in this example and is shaped to receive wire therethrough. Each of the sleeves 215 is configured to align with a respective one of the push-out tabs 218.

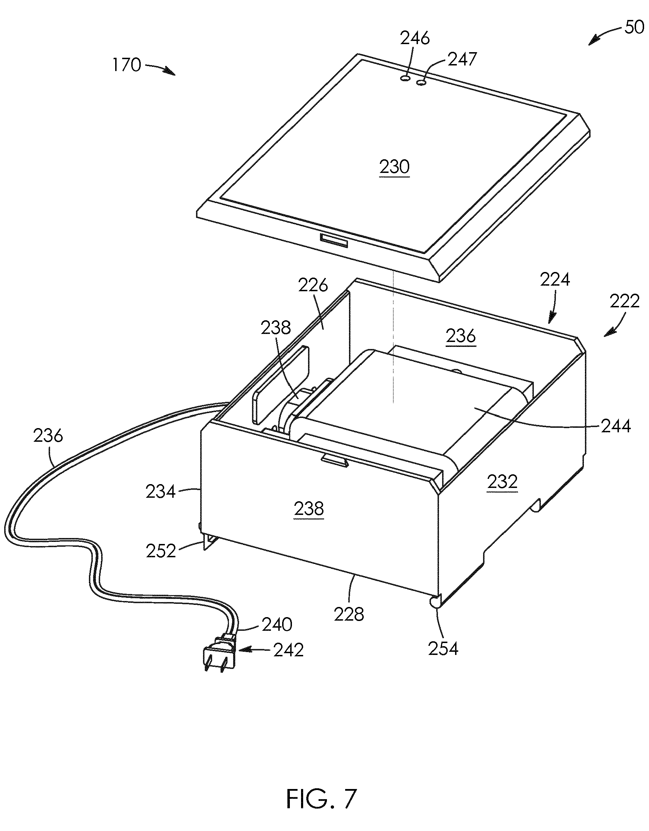

As seen in Figure 7, the modular track wiring assembly 170 includes a transformer module 222. The transformer module includes a hollow housing 224 which is generally in the shape of a rectangular prism in this example. The housing has an interior 226, a base 228, a removable cover 230 spaced-apart from the base, a first or top end 232, a second or bottom end 234 spaced-apart from the top end, and a pair of spaced-apart sides 236 and 238. The ends and sides of the housing 224 extend between the base and cover thereof. The sides 236 and 238 of the housing extend between the ends 232 and 234 thereof.

Referring to Figure 5, each of the covers 230 of the modules of the hydronic system 50 includes a pair of side apertures extending therethrough in this example, as seen by side aperture 231 in Figure 5. Each of the modules of the hydronic system in this example includes a pair of resilient clips coupled to and extending outwards from respective ones of the sides of its housing, as seen by clip 233 coupled to side 238 of housing 224 of module 222. The clips align with and extend through respective ones of the side apertures 231 of the module for selectively coupling the cover 230 to the rest of the housing. Inward compression of the clips 233 dislodges the clips from the side apertures of the covers and enables a user to selectively remove cover 230.

Referring to Figure 6, the transformer module 222 includes an electric cable 236 having a proximal end 238 extending through bottom end 234 of the housing 224 and a distal end 240 spaced-apart from the proximal end. The transformer module includes an outlet plug 242 at the distal end 240 of the cable. The outlet plug is connectable to an electrical outlet (not shown) for receiving a voltage, in this example a high input voltage.

The transformer module 222 further includes a transformer 244 positioned within the interior 226 of housing 224. The transformer is operatively coupled to the proximal end 238 of cable 236. The transformer module 222 is thus connectable to a high voltage source in this example. As seen in Figure 6, the transformer module includes a pair of spaced-apart leads, in this example in the form of outwardly-biased, spring-loaded pins 248 and 250. The pins extend downwards from the base 228 of housing 224 from the perspective of Figure 6. The pins 248 and 250 are configured to align with and engage with power conductors 198 and 200, respectively.

Transformer 244 seen in Figure 7 is operatively interposed between cable 236 and pins 248 and 250 seen in Figure 6, and is configured to transform high input voltage received from cable 236 to a low output voltage. In this example, the transformer reduces an input voltage of either 120VAC or 240VAC via a built-in switch to an output of 24VAC outputted via pins 248 and 250 seen in Figure 6. Referring to Figure 6, pins 248 and 250 thus provide power to power conductors 198 and 200 of the track 172. This energy is used in this example to drive zone valve motors and energize relays for switching power and signals to devices such as circulating pumps, as will be described in further detail below.

Referring to Figure 7, the transformer 244 may have a variable input voltage option, in which the input voltage can be pre-selected, for international installations. The transformer can be adapted to electrical receptacles of different shapes in various countries with the use of a corresponding plug for the electrical system at hand. The transformer module 222 requires no tools or "hard" wiring by an electrician to be installed; rather, it can simply plug into a nearby power receptacle. Transformers per se, including their parts and functionings, are well-known to those skilled in the art and therefore will be not be described in further detail.

As seen in Figure 7, the transformer module 222 includes diagnostic lights 246 and 247 configured to emit light signals for confirming line input voltage (120-240V) and low output voltage (24V), respectively, in this example. The transformer module also includes a protective, replaceable fuse (not shown) in this example.

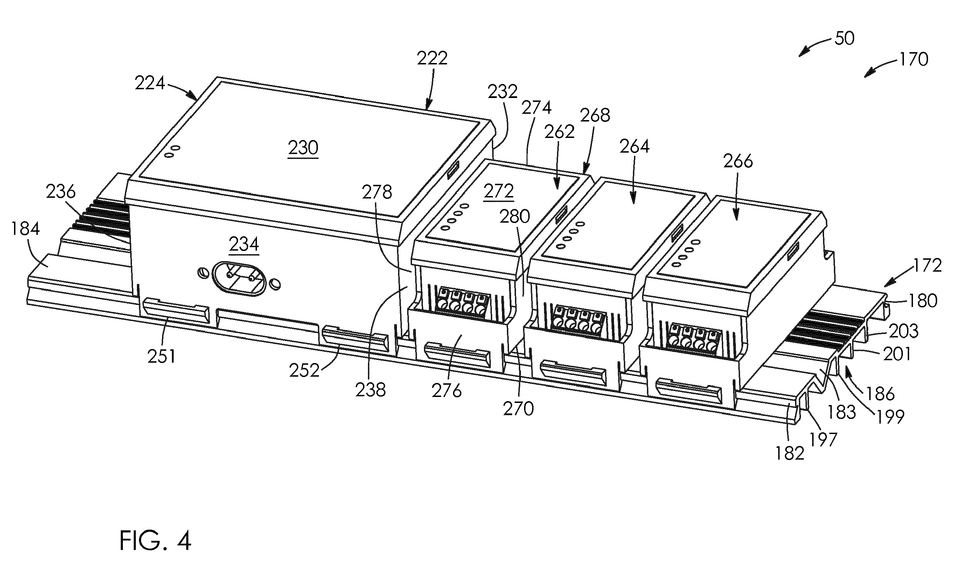

As seen in Figure 5, the transformer module 222 includes a pair of spaced-apart longitudinally spaced-apart and longitudinally-extending lower protrusions, in this example longitudinally-extending, resilient male protrusions in the form of catches 251 and 252. The catches extend outwards from bottom end 234 of housing 224 in a downward direction relative to Figure 4. As seen in Figure 6, the catches 251 and 252 are hook-shaped in cross-section in this example in an inwardly-facing direction. The catches are shaped to be received by and couple with recessed edge portion 182 of track 172 in a snap-fit manner in this example. As seen in Figure 5, catches 251 and 252 include an outwardly-facing protuberances 253 and 255, respectively, extending outwards from the bottom end 234 of the housing 224. Each protuberance is receptacle shaped and includes an open end shaped to receive the end of a screwdriver, for example. This is shown by open end 257 for protuberance 255 which is shaped to receive end 261 of screwdriver 263 as seen in Figure 6.

The transformer module 222 further includes a longitudinally-extending upper male protrusion 254 in this example which aligns opposite the catches, as seen in Figure 6 by protrusion 254 aligning opposite catch 252. The protrusion extends outwards from top end 232 of housing 224 in a downward direction relative to Figure 6. The protrusion 254 is rounded and circular in cross-section. The protrusion is shaped to be received within and rotatable couple with recessed edge portion 180 of track 172 in this example. Protrusion 254 is of a shape that is different from and non-symmetrical with catches 252. The non-symmetrical nature of recessed edge portions 180 and 182 of the tracks 172 may promote installation of the module 222 in the correct orientation.

Thus, in operation and referring to Figure 5, the transformer module 222 is selectively connectable to track 172 by inserting protrusions 254 within recessed edge portion 180 of the track. Thereafter, the rest of the housing 224 may be pivoted downwards relative to Figure 5, as seen by arrow of numeral 256. Catches 251 and 252 thereafter couple with recessed edge portion 182 of the track 172 as seen in Figure 6. Prying protuberances 255 off the catches 252 by inserting, for example, the end 259 of a screwdriver 261 within open ends 257 of the protuberances, and pulling the module 222 upwards, as indicated by arrow of numeral 258, causes catches 252 to bend outwards, as indicated by arrow of numeral 260, for selectively removing the module as desired.

As seen in Figure 6, pins 248 and 250 are configured to align with and electrically connect with power conductors 198 and 200 when the transformer module 222 is so coupled to track 172. The module thus supplies the power conductors with electrical energy having low output voltage.

As seen in Figures 3 and 4, the modular track wiring assembly 170 includes a plurality of other modules per track 172 including power modules 262 and 264 and zone modules 266 in this example. Each of the modules is generally the same in outer configuration and thus only the outer configuration of power module 262 will be described in detail. Referring to Figure 4, the power module includes a hollow housing 268 which is generally in the shape of a rectangular prism in this example. The housing has a base 270, a removable cover 272 which is spaced-apart from the base, a first or top end 274, a second or bottom end 276 spaced-apart from the top end, and a pair of spaced-apart sides 278 and 280. The ends and sides of the housing 268 extend between the base and cover thereof. The sides 278 and 280 of the housing extend between the ends 274 and 276 thereof.

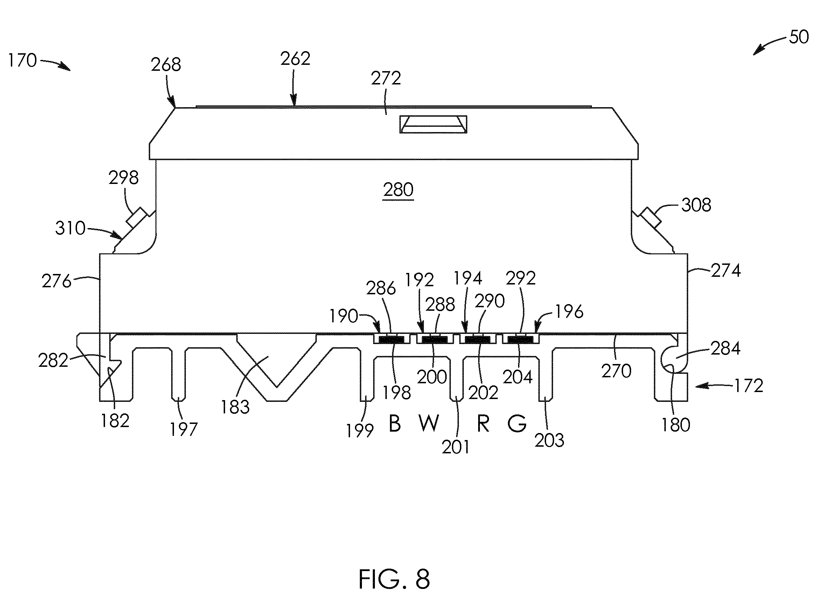

As seen in Figure 8, each of the modules 262 includes a longitudinally-extending lower protrusion, in this example a longitudinally-extending, resilient male protrusion in the form of a catch 282. The catch extends outwards from bottom end 276 of housing 268 in a downward direction relative to Figure 8. Each catch is hook-shaped in cross-section in an inwardly-facing direction this example. Each catch 282 is substantially similar in shape to catches 251 and 252 of module 222 seen in Figure 6. The catches are shaped to be received by and couple with recessed edge portion 182 of track 172 in a snap-fit manner in this example.

Each of the modules 262 includes a longitudinally-extending upper male protrusion 284 in this example which aligns opposite its catches 282. The protrusion extends outwards from top end 274 of housing 268 in a downward direction relative to Figure 8. The protrusion 284 is rounded and circular in cross-section. The protrusion is substantially similar in shape to protrusion 254 of module 222 seen in Figure 6. The protrusion 284 is shaped to be received within and rotatable couple with recessed edge portion 180 of track 172. In this manner and referring to Figure 4, each of the modules of assembly 170 as herein described may selectively couple to respective ones of the tracks 172 thereof.

As seen in Figure 8, each of the modules 262 includes a pair of spaced-apart power leads, in this example in the form of outwardly-biased, spring loaded power pins 286 and 288 for coupling with the power conductors 198 and 200. Each of the modules 262 includes a pair of spaced-apart signal leads, in this example in the form of outwardly-biased, spring loaded signal pins 290 and 292. Each of the pins extends downwards from the base 270 of housing 268 in this example. Power pins 286 and 288 are configured to align with and engage with power conductors 198 and 200. Signal pins 290 and 292 are configured to align with and engage with signal conductors 202 and 204.

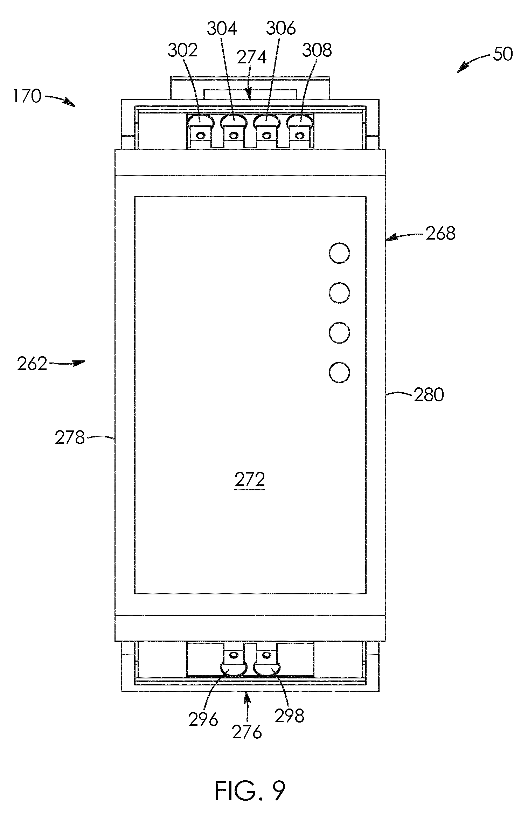

Referring to Figure 9, each of the power modules 262 includes a first plurality of spaced-apart terminals, in this example in the form of two terminals 296 and 298. Other types of modules in the modular track wiring assembly 170 may have additional terminals. Terminals 296 and 298 are positioned adjacent to the bottom end 276 of housing 268. Each of the power modules 262 includes a second plurality of spaced-apart terminals, in this example in the form of four terminals 302, 304, 306 and 308. Other modules of assembly 170 may have more or fewer terminals. Terminals 302, 304, 306 and 308 are positioned adjacent to the top end 274 of the housing 268.

As seen in Figure 8, each of the modules 262 includes an electrical connector for each of its terminals in this example, as shown by connector 310 for terminal 298. Each connector is configured to selectively receive and couple thereto an exposed end of an electrical cable (not shown). Each connector 310 in this example is in the form of a quick-connect push-in wiring terminal to reduce installer time and eliminate the need for screwdrivers, for example. Electrical connectors 310 per se, including their various parts and functionings, are well-known to those skilled in the art and therefore will not be described in further detail.

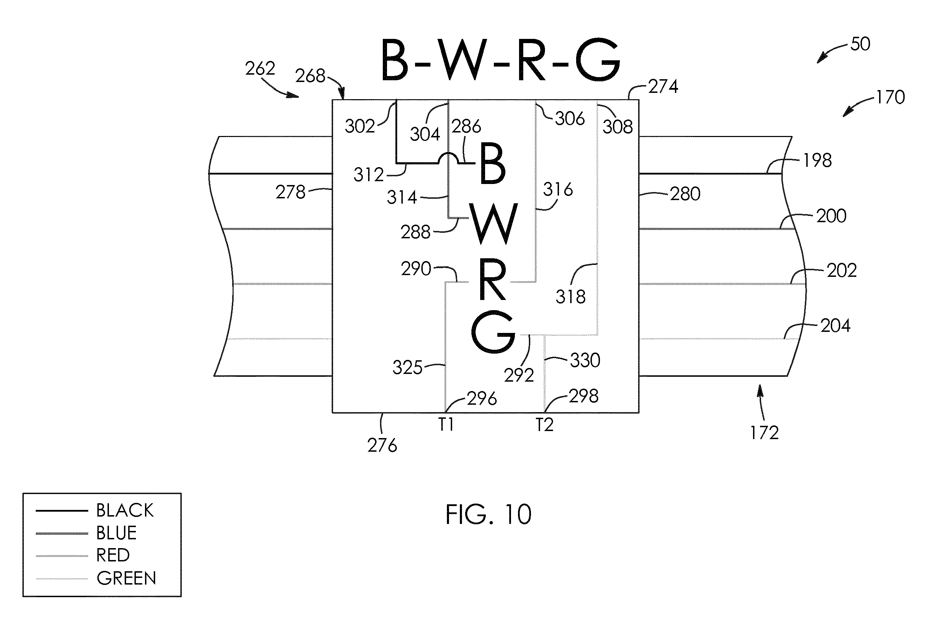

Each of the power modules 262 includes a plurality of electrical conductors which couple together various of these pins and connectors, as shown by the schematic diagram of the internal wiring of power module 262 in Figure 10. In this example, terminal 302 is associated with the letter B (black), terminal 304 is associated with the letter W (white), terminal 306 is associated with the letter R (red), and terminal 308 is associated with the letter G (green). Each of the power modules 262 includes: a conductor 312 which electrically connects together power pin 286 and terminal 302; a conductor 314 which electrical connects together power pin 288 and terminal 304; a conductor 316 which electrically connects together signal pin 290 and terminal 306; and a conductor 318 which electrically connects together signal pin 292 with terminal 308.

As seen in Figure 11, modular track wiring assembly 170 includes three power modules 262, 264 and 320 coupled to primary track 172, and an additional three power modules 322, 324 and 326 coupled to remote tracks 174, 176 and 178, respectively. Referring to Figures 10 and 11, a plurality of electrical conductors, in this example wires 329, 331, 333 and 337 electrically couples together terminals 302, 304, 306 and 308 of the power modules 320 and 322 of tracks 172 and 174. The wires as herein described may be 18/4 gauge wire in this example, though this is not strictly required and other wires may be used in other embodiments. Similarly, electrical wires 336, 338, 340 and 342 couples the terminals 302, 304, 306 and 308 of respective ones of power modules 262 and 324 of tracks 172 and 176 together. Likewise, electrical wires 344, 346, 348 and 350 couples the terminals 302, 304, 306 and 308 of respective ones of power modules 264 and 326 of tracks 172 and 178 together.

The power modules thus extend the range of the transformer module 222 and function to electrically couple together the power conductors 198 and 200 and signal conductors 202 and 204 of the tracks 172, 174, 176 and 178. In this manner and referring to Figure 11, power modules 262, 264, 320, 322, 324 and 326 convert tracks 172, 174, 176 and 178 into what may effectively be considered one continuous track. The power modules can thus supply 24VAC to the remote tracks 174, 176 and 178, and enable the return of closed "end" switch signals back to the primary track 172 where the signal(s) may be used either directly by the boiler 52, seen in Figure 1, for heating operation, or for energizing relays for other devices and equipment as will be further described below.

Referring to Figure 10, each of the power modules 262 further includes an electrical conductor 325 which couples signal pin 290 to terminal 296 and an electrical conductor 330 which couples signal pin 292 to terminal 298. Terminals 296 and 298 are included for auxiliary use such as, for example, to connect to the boiler 52, seen in Figure 1, when all available R-G terminals are being used.

As seen in Figure 3, each of the power modules 262 is supplied in this example with a diagnostic light 323 configured to show that 24VAC is being supplied along power conductors 198 and 200 of the track 172. Each of the power modules further includes in this example a diagnostic light 325 configured to indicate when a call for heat/cold signal is present along signal conductors 202 and 204.

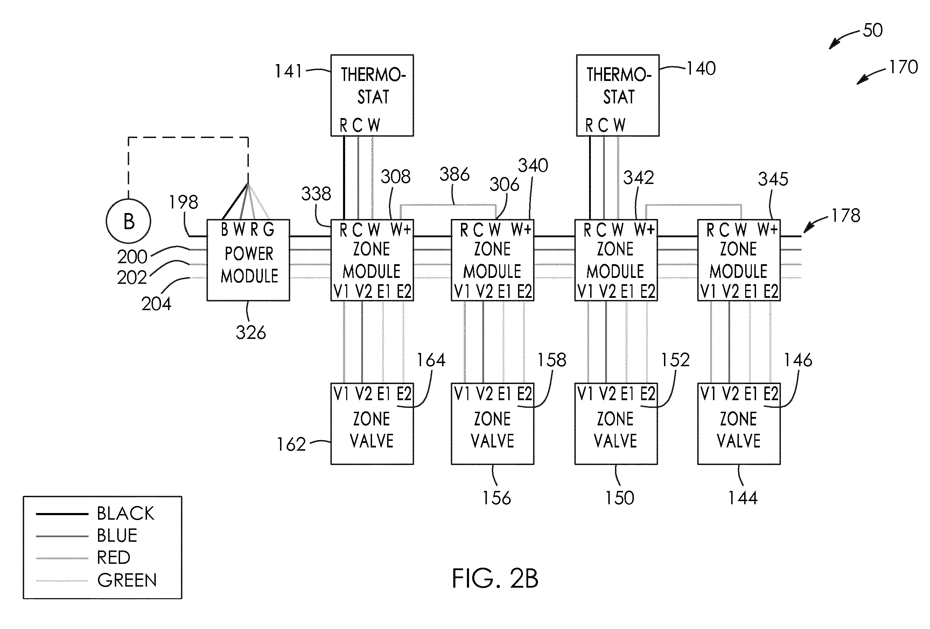

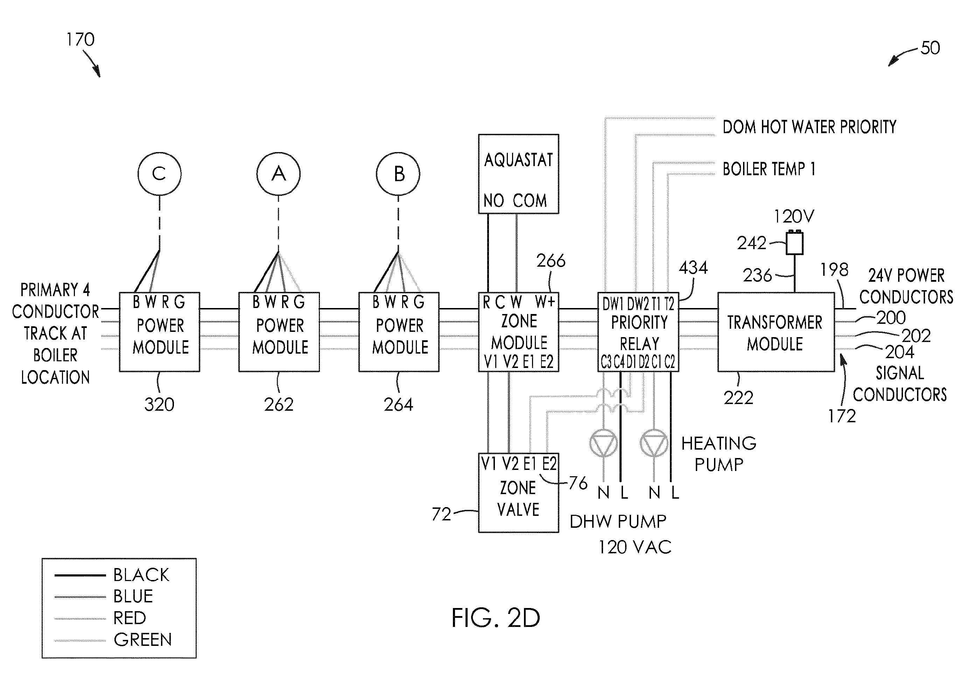

As seen in Figures 2A to 2D, the modular track wiring assembly 170 includes a plurality of zone modules, including: zone module 266 coupled to track 172 as seen in Figure 2D; zone modules 335 and 336 coupled to track 176 as seen in Figure 2A and associated with zones 104 and 106, respectively, as seen in Figure 1; and zone modules 338, 340, 342 and 345 coupled to track 178 as seen in Figure 2B and associated with zones 114, 112, 110 and 108, respectively, as seen in Figure 1.

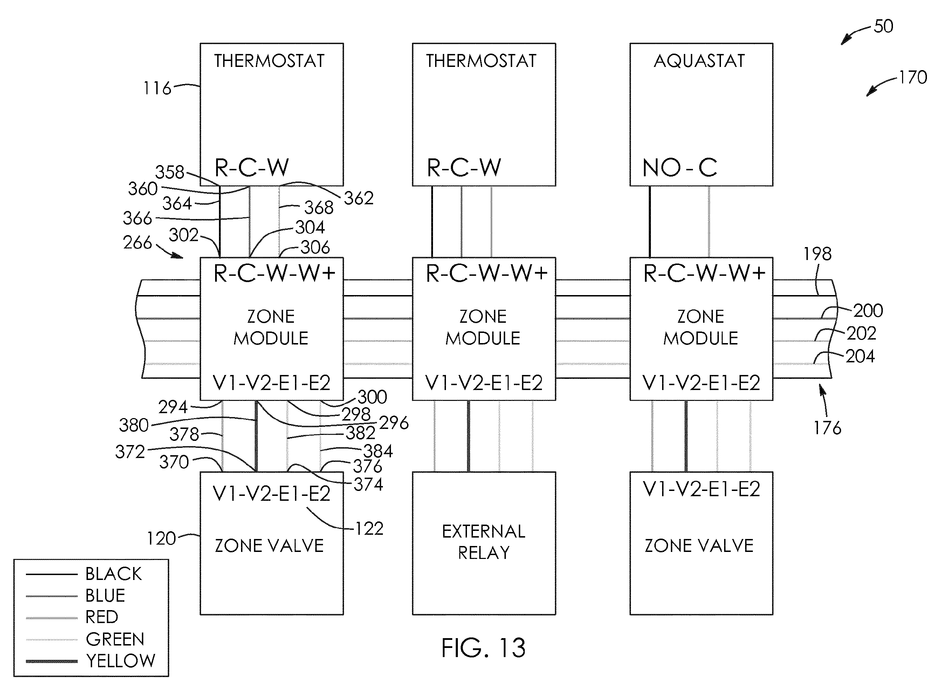

Referring to Figure 13, each of the zone modules includes electrical conductors and is configured via its terminals to electrically couple together the temperature-sensing device, in this example thermostat 116, and zone valve 120 associated with its zone, power the thermostat and zone valve via the power conductors, receive end switch signals when their zone valve 120 is fully open, and convey said signals along the signal conductors to call for heabcold.

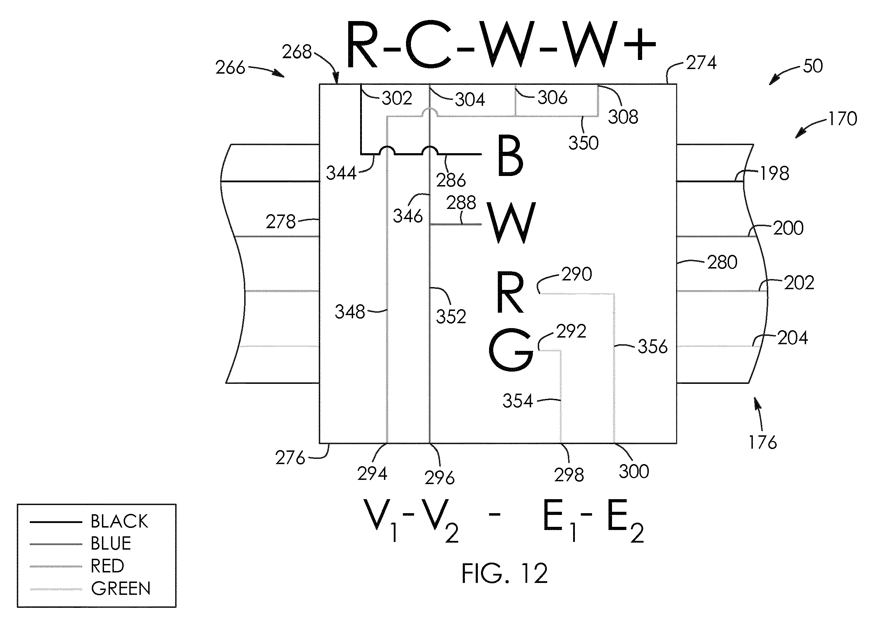

Each of the zone modules is substantially the same and thus only zone module 266 seen in Figure 12 will be described in detail. The first plurality of spaced-apart terminals of zone module 266 extending from bottom end 276 thereof includes an additional two spaced-apart terminals 294 and 300. Each of the zone modules comprises a plurality of internal electrical conductors, in this example wires, including: a wire 344 which electrically couples together its terminal 302 and power pin 286; a wire 346 which electrically couples together its terminal 304 and power pin 288; a wire 348 which electrically couples together its terminals 306 and 294; a wire 350 which together with wire 348 electrically couples together terminals 308 and 294; a wire 352 which electrically couples together power pin 288 and terminal 296; a wire 354 which electrically couples together signal pin 292 and terminal 298; and a wire 356 which electrically couples together signal pin 290 and terminal 300. Terminal 302 may be referred to as a thermostat input terminal in this example. Terminal 306 may be referred to as a thermostat output terminal in this example.

As seen in Figure 13, each of the thermostats 116 of the modular wiring assembly 170 has a plurality of terminals including a power input terminal 358 labelled R, a terminal 360 for electronic or digital thermostats labelled C, and a power output terminal 362 labelled W. The modular wiring assembly includes a plurality of electrical conductors, in this example wires which couple each zone module 266 with the corresponding thermostat for its zone, including: wire 364 which electrically couples terminal 302 of module 266 to power input terminal 358 of the thermostat; wire 366 which electrically couples terminal 304 of the module to terminal 360 of the thermostat in cases where the thermostat is electronic or digital; and wire 368 which electrically couples terminal 306 of the module to power output terminal 362 of the thermostat. Zone modules 266 can be controlled by thermostats 116 having a C terminal 304/360 connection to allow electronic thermostats to be powered by the transformer 222 instead of having to depend on batteries. Thermostats per se, including their various parts and functionings, are well-known to those skilled in the art and therefore will not be described in further detail.

Referring to Figure 13, each of the zone valves 120 has a plurality of terminals including a zone valve motor input terminal 370 labelled V1, a zone valve motor output terminal 372 labelled V2, and a pair of end switch terminals 374 and 376 labelled E1 and E2, respectively. The modular wiring assembly 170 includes a plurality of electrical wires which couples each zone module 266 with its corresponding zone valve 120 for its zone, including: wire 378 which electrically couples terminal 294 of module 266 to zone valve motor input terminal 370 of the zone valve; wire 380 which electrically couples terminal 296 of the module to zone valve motor output terminal 372 of the zone valve; wire 382 which electrically couples terminal 298 of the module to end switch terminal 374 of the zone valve; and wire 384 which electrically couples terminal 300 of the module to end switch terminal 376 of the zone valve. Zone valves per se, including their various parts and functionings, such as zone valve motors for selectively opening the valves and end switches for determining when the valve is fully open and sending signals thereafter, are well-known to those skilled in the art and therefore will not be described in additional detail.

In operation, power is directed to the thermostat 116 on terminal 302. For electronic or digital thermostats, the thermostat is energized by connecting the terminals 304 and 360 on the module 266 and thermostat 116. On a call for heat, that is when the thermostat 116 determines that the zone temperature deviates from a threshold temperature range, the thermostat closes and the thermostat outputs a valve-actuation signal, in this case a 24 volt signal from terminal 362 through wire 368 to terminal 306, from terminal 306 to terminal 370 (V1) of the zone module 120 through the internal wiring of the module 266 and wire 378. This energizes the zone valve motor 143 of the zone control valve 120 seen in Figure 1 and the valve opens as a result to allow the flow of hot/cold water to circulate through the zone fluid loop of its zone 104, as for example shown by loop 118.

Once the zone valve is fully open, a small micro end switch 122 in the valve closes and outputs a call for heabcold signal through terminals 374/298 shown in Figure 13 and 376/300 (E1-E2) to signal pins 290 and 292 (R-G) shown in Figure 12. This signal will then either be connected to a boiler activation circuit (TT or TH) or to a relay which will start other equipment (circulating pumps, boiler, fans). As seen in Figure 3, each of the zone modules 266 has diagnostic light 377 which show: 24VAC present; a thermostat call for heat; and when the end switch is closed. The signal conductors are thus in communication with a given heat/cold source and the heat/cold source is configured to supply heat/cold to the loop 118 of the zone 104 upon receiving the call to heat/cold signal.

Referring to Figures 2A to 2D, this zone module operation is repeated for every thermostat/aquastat and zone valve in the system 50. Where multiple zone control valves connect to the same thermostat, a "daisy-chain" connection between adjacent zone modules is made which then powers the additional valve(s) in a parallel circuit. This is seen in Figure 2B by terminal 308 of zone module 338 electrically coupling via wire 386 to terminal 306 of zone module 340 and zone valve 156 being powered thereby upon receiving a signal that thermostat 141 has closed.

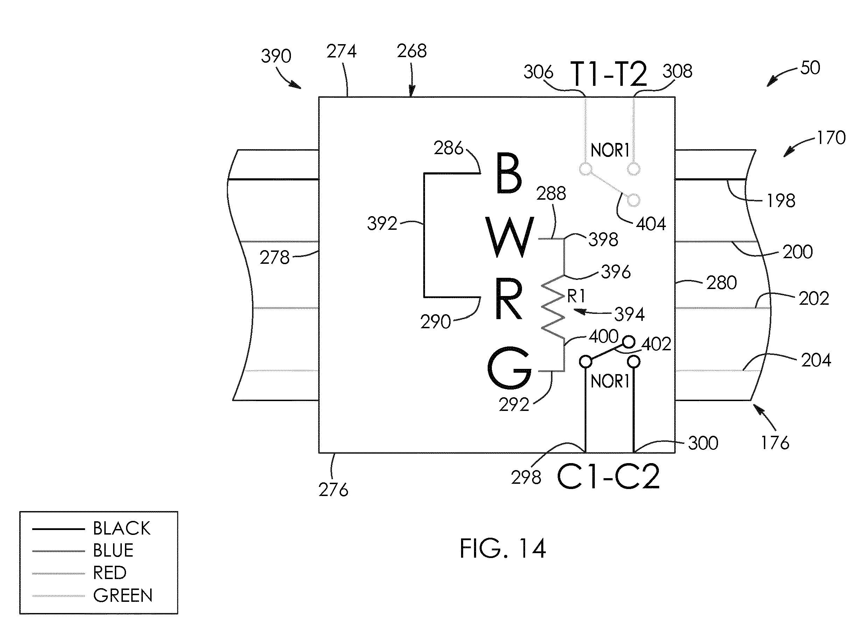

Referring now to Figure 14, the modular wiring assembly 170 may include a relay module 390. The relay module is configured to couple power conductor 198 to signal conductor 202 via an electrical conductor 392 which couples power pin 286 and signal pin 290 of the module together. The relay module 390 further includes a relay 394 which incorporates an electromagnet 396 coupled to and interposed between power conductor 200 and signal conductor 204 via power pin 288, electrical conductor 398 extending between and connecting the pin and electromagnet together, and electrical conductor 400 extending between and connecting signal pin 292 and the electromagnet together.

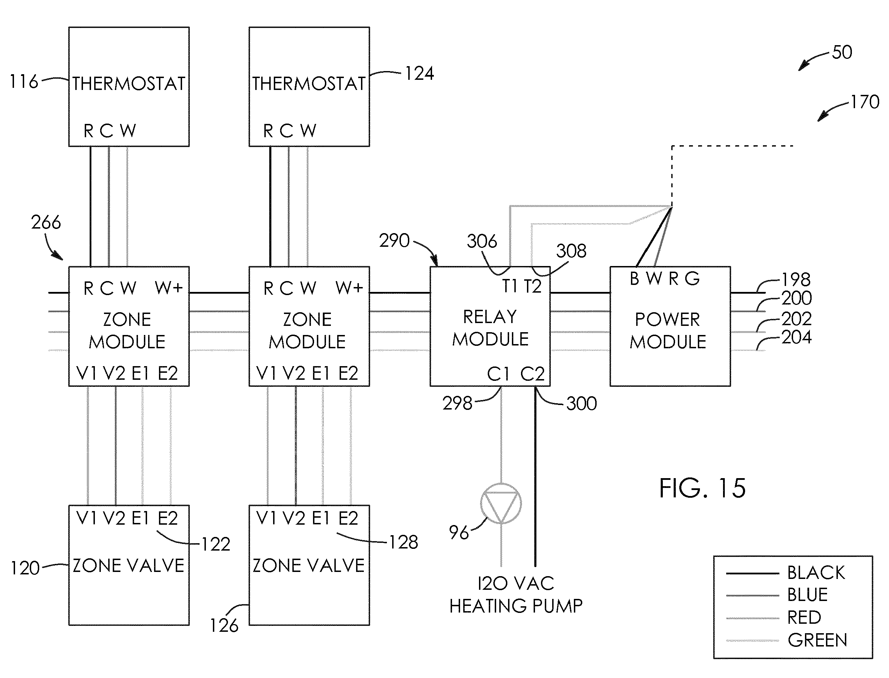

The relay module 390 includes a first plurality of terminals in the form of terminals 298 and 300 and a second plurality of terminals in the form of terminals 306 and 308. Terminals 298 and 300 and terminals 306 and 308 are configured to be normally open terminals for connecting to auxiliary components, such as a heat/cold source of the system in the form of boiler 52 seen in Figure 1 and associated circulating pump 96. As seen in Figure 14, normally open switches 402 and 404 are interposed between and coupling to the terminals 298 and 300 and 306 and 308, respectively. Referring to Figures 1 and 15, each of the switches is responsive to the electromagnet 396 whereby the call for heat/cold signal from the end switch 122 of zone valve 120 conveyed along signal conductor 204 causes the electromagnet 396 to close the switches 402 and 404 and activate the boiler 52 and pump 96 seen in Figure 1.

Thus, referring to Figure 14, the relay module 390 uses a closed switch signal to energize relay 394. The relay may be suitable for single temperature systems as the relay is activated by any closed switch in the system. Power is diverted from the B pin 286 to the R pin 290. This in turn energizes the bottom two sets of track conductors 202 and 204. When an end switch or thermal control closes, power returns to the relay module 390 where it activates the relay 394. This closes the two sets of normally open terminals (T1-T2) and (C1-C2). The relay module 390 includes in this example diagnostic lights to indicate the presence of 24V power and a call for heat/cold signal.

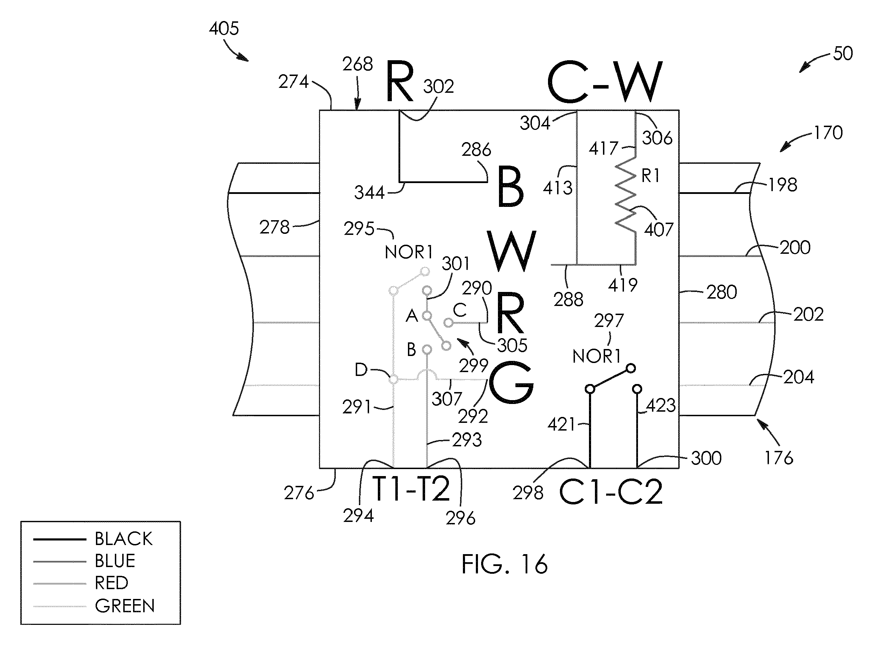

As seen in Figure 16, the modular wiring assembly 170 may include a pump module 405. The pump module is similar to zone module 266 seen in Figure 12, with like parts having like numbers, with the following exceptions. The pump module 405 includes a relay 407 coupled to and interposed between terminal 306 (W) and power pin 288 (W). Conductor 417 extends between and electrically connects together terminal 306 (W) and relay 407. Conductor 419 extends between and electrically connects together power pin 288 (W) and relay 407.

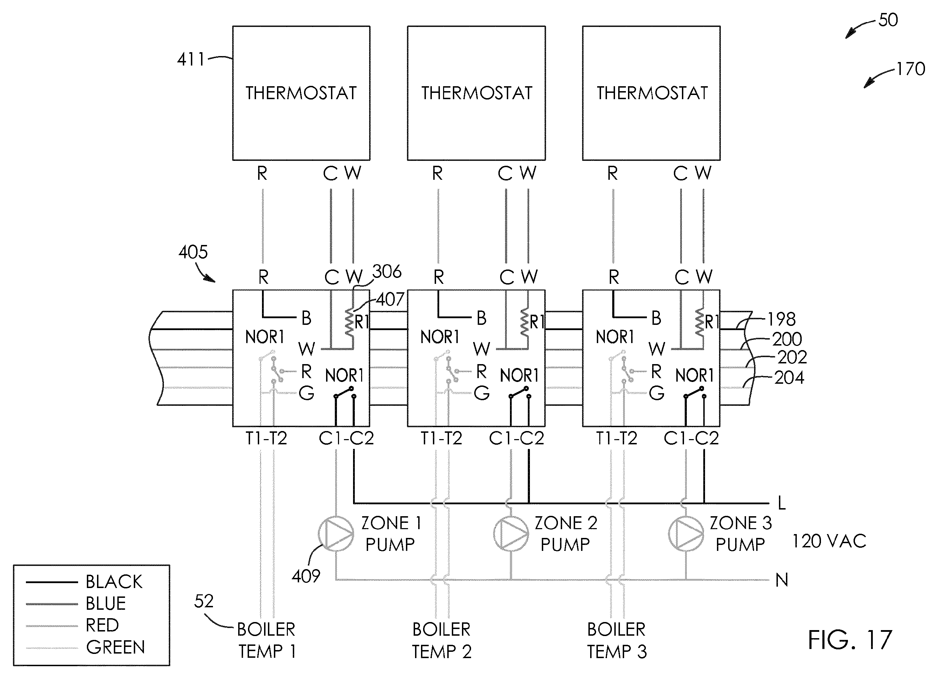

The pump module includes a wire 413 connecting terminal 304 (C) of the module to power pin 288 (W). Power is diverted from the pin 286 (B) to terminal 302 (R) via wire 344. When a thermal control closes such as that of thermostat 411 seen in Figure 17, for example, power returns to the terminal 306 (W) of the pump module 405 where it activates the relay 407.

As seen in Figure 16, the pump module includes wires 291 and 293 connected to and extending from terminals 294 (T1) and 296 (T2), respectively. The pump module 405 further includes a normally open switch 295 (NOR1) interposed between wire 291 and a further wire 301. A wire 305 connects to and extends from pin 290 (R) of the module. The module 405 includes a small two-way actuator, in this example button switch 299 on the exterior of the module adjacent to terminals 294 and 296 (T1-T2). The switch 299 is connected to wire 301.

When depressed, the two-way switch 299 is moveable to a first position in which wires 301 and 305 connect together (A to C). Activation of relay 407 (R1) causes normally-open switch 295 (NOR1) to close, and the signal is routed from pin 290 (R) to the 'C' two-way switch contact which then is connected to the `A' two-way switch contact. The signal continues through the normally open switch 295 (NOR1) relay contacts which are now closed, down to the 'D' wiring junction, and on to pin 292 (G) via wire 307. In this case a call for heat would send a signal to the track 170, effectively R to G.

As mentioned above, power is diverted from the B pin 286 to the terminal 302 (R) and when a thermal control closes, power returns to terminal 306 (W) of the pump module 405 where it activates relay 407. This closes two sets of normally open contacts 295 and 297 (NOR1). One set is C1-C2 which allows for a circulating pump or other device to be connected thereto. Conductor 421 extends between and electrically connects together switch 297 and terminal 298 (C1). Conductor 423 extends between and electrically connects together switch 297 and terminal 300 (C2).

The second set of contacts has an optional output to either the track via pins 290 (R) and 292 (G) or to the bottom of the module 405 at terminals 294 and 296 (T1-T2).

Thus, when thermal or mechanical control, in this example thermostat 411 seen in Figure 17 closes, a pump actuation signal received therefrom energizes the relay 407. This will in turn close normally open switches 295 and 297 extending between two sets of normally open terminals 294 and 296 (T1-T2) and 298 and 300 (C1-C2), respectively, for uses such as connecting a boiler 52 or other equipment such as a circulating pump 409 seen in Figure 17. Actuation of the relay 407 (R1) causes the terminals to close for actuating the circulating pump and boiler. This allows the choice of using circulators for zoning but being able to include the call for heat onto the track for common use as in the example of a single temperature system, or to provide separate signals for multiple temperatures. Multiple temperatures can be achieved with a multiple temperature capable boiler or auxiliary mixing methods. Diagnostic lights indicate 24V power and a call for heat.

Pump module 405 is thus suitable for multiple temperature systems as the relay is only activated by one specific switch (thermal or mechanical) from one location in the system. It is best used in applications where circulating pumps are utilized for zoning instead of zone control valves. In another example, the module 405 may use a signal from a specific module or individual remote track to energize the relay 407.

There is a switchable option to send the closed circuit signal either to the track for use is a single temperature system or to terminals at the bottom edge of the pump module 405 where the signal can be used for other applications such as a multiple temperature system. Referring to Figure 16, if the two-way button switch 299 is not depressed, the two-way switch is moveable to a second position which connects wires 293 and 301 together ('A' to 'B'). On a call for heat from the thermostat 411 seen in Figure 17, and with the normally-open switch 295 (NOR1) seen in Figure 16 closed, a closed switch is provided at terminals 294 and 296 (T1-T2) when the two-way switch 299 is in its second position. This option allows for a signal in a single temperature system to be applied to the signal track through pins 290 and 292 (R-G), or alternatively to allow one of a number of signals for a multiple temperature system via the 294 and 296 (T1-T2) terminals.

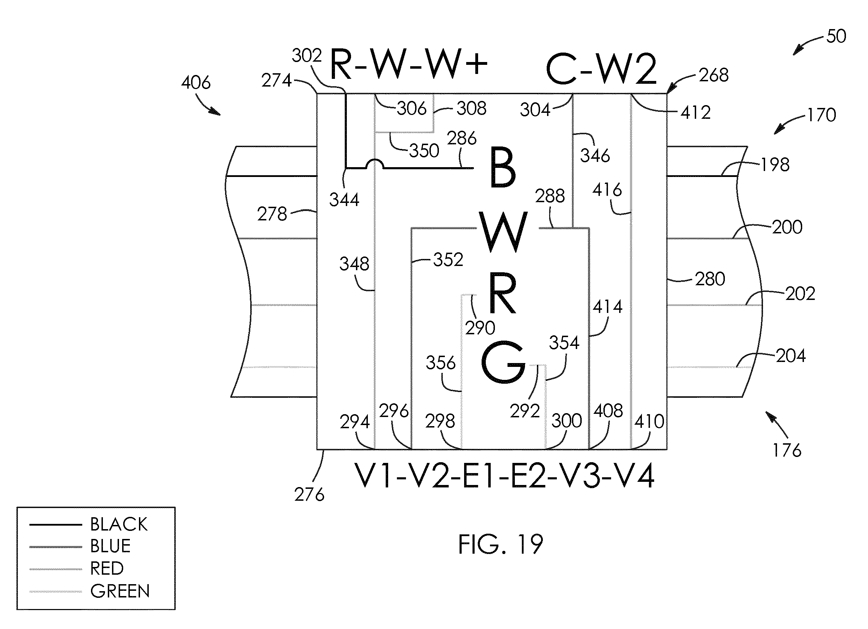

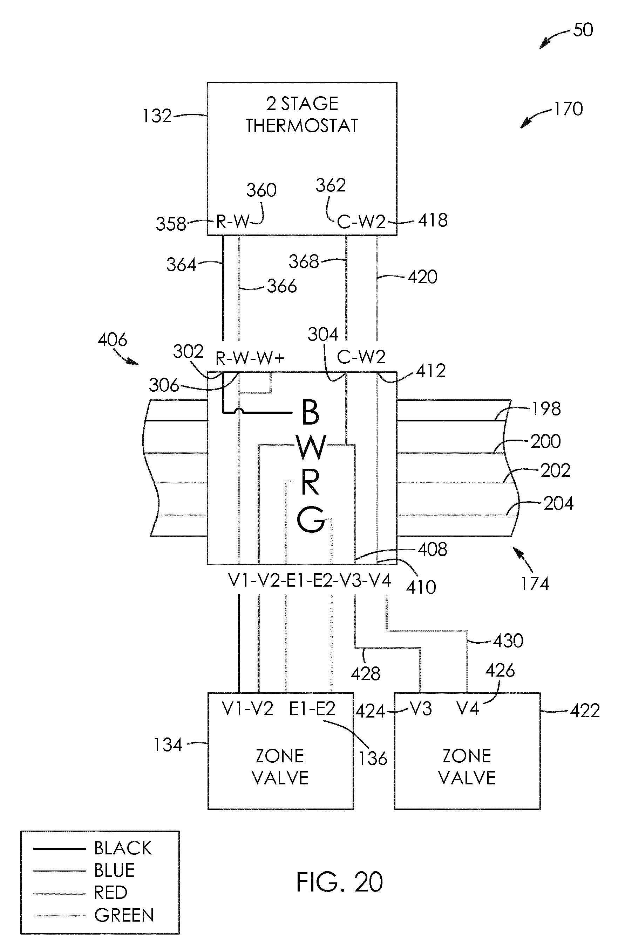

Referring now to Figure 19, the modular wiring assembly 170 may include a two-stage zone module 406 for use with a two-stage thermostat 132 seen in Figure 20. There is an allowance for a second stage of heat for applications where the first stage is insufficient. Two-stage zone module 406 is similar to zone modules 266 seen in Figure 12, with like parts having like numbers, and with the following exceptions. The first of the plurality of terminals of module 406 includes an additional pair of terminals 408 and 410 (V3-V4) and the second of the plurality of terminals of the module includes an additional terminal 412 (W2). The module includes a series of additional electrical conductors, in this example wires including: wire 414 which electrically couples power pin 288 to terminal 408; and wire 416 which electrically couples together terminals 410 and 412. Referring to Figure 20, the two-stage thermostat 132 includes an additional terminal 418 (W2) which couples to terminal 412 of module 406 via a wire 420. The two-stage thermostat outputs an additional valve-actuation signal via terminals 418/412 should the zone temperature continue to deviate from the threshold temperature past a set amount of time or temperature difference. The additional valve-actuation signal may be referred to as a call for additional heating/cooling signal. Two-stage thermostats per se, including their various parts and functionings, are well-known to those skilled in the art and therefore will not be described in further detail.

As seen in Figure 20, an additional zone valve 422 may couple via its zone valve motor input and output terminals 424 and 426 to terminals 408 and 410 (V3-V4) of the two-stage zone module 406 via wires 428 and 430. In this manner, zone valve 422 may receive power from the thermostat 132 for selectively opening the valve and thereby providing an additional source of circulating heated fluid, for example, for heating the zone.

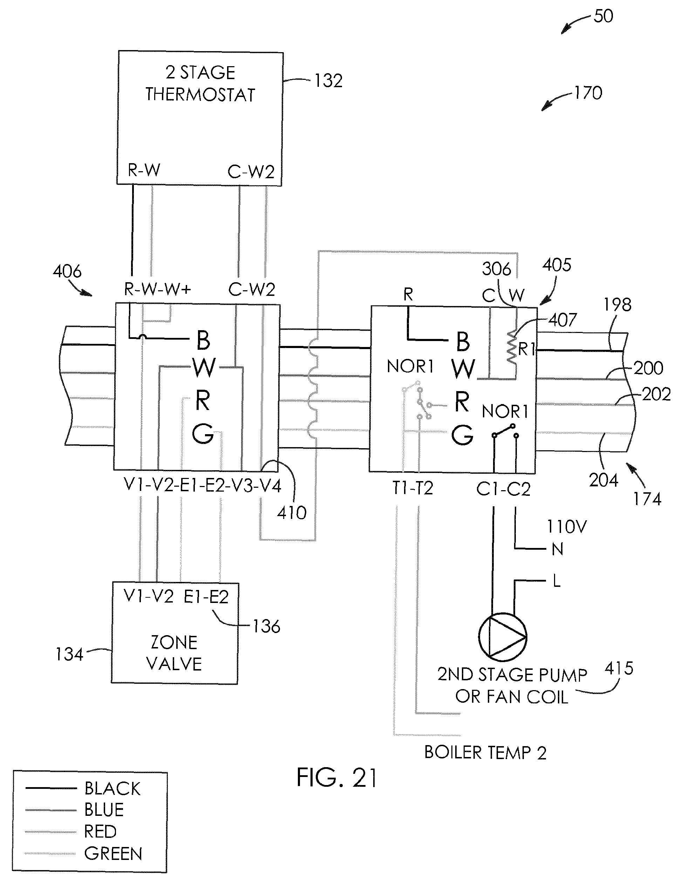

Alternatively and as seen in Figure 21, terminal 410 of two-stage zone module 406 may couple to terminal 306 and relay 407 of pump module 405 for other uses such as a fan coil unit or circulator 415. The two-stage zone module includes diagnostic lights to indicate the presence of 24V power, when the thermostat 132 is closed, when the end switch 136 of the primary zone valve 134 is closed (call for heat) and when activation of second stage heating has occurred, for example.

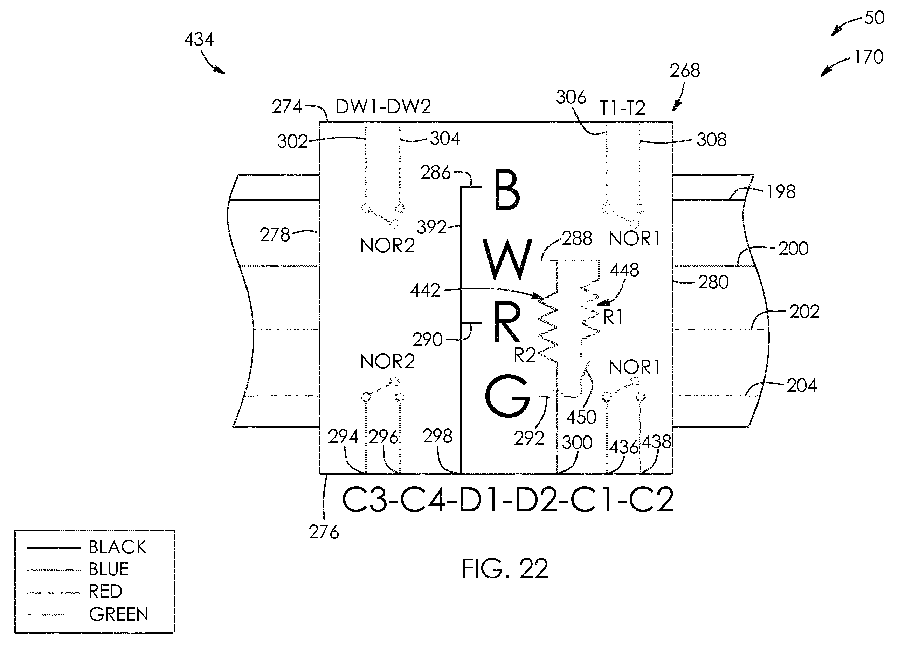

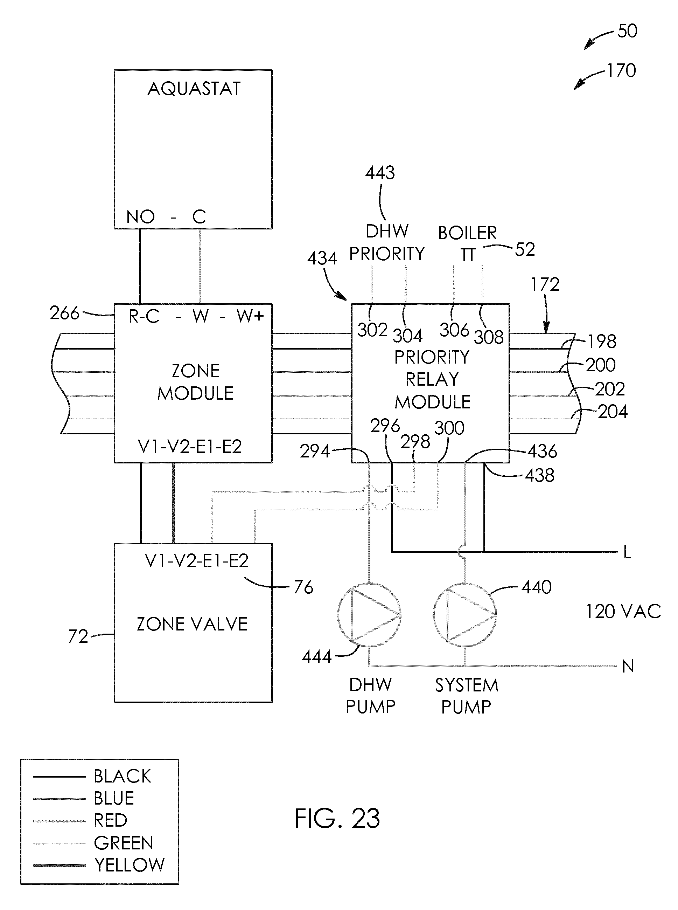

As seen in Figure 22, the modular wiring assembly 170 may include a priority relay module 434, which is similar to relay module 390 seen in Figure 14 with some exceptions. The priority relay module includes a first pair of normally open terminals 306 and 308 (T1-T2) connectable to a primary heat/cold source of the hydronic system 50 such as boiler 52 seen in Figure 23. Referring back to Figure 22, the priority relay module 434 includes a second pair of normally open terminals 436 and 438 (C1-C2) connectable to a circulating pump 440 of the zone seen in Figure 23.

As seen in Figure 22, the priority relay module includes a first relay 448 (R1) activated by the call for heat/cold from the signal conductors 202 and 204 seen in Figure 22, or other thermal control which closes. The first relay so activated is configured to cause the priority relay module 434 to couple power pin 288 and signal pin 292 together, cause the first pair of terminals 306 and 308 to couple together for actuating the boiler 52 seen in Figure 23 and cause the second pair of terminals 436 and 438 to couple together for actuating the pump 440 seen in Figure 23.

The priority relay module 434 diverts power from the power pin 286 (B) to the signal pin 290 (R) via wire 392, which in turn energizes the bottom two sets of signal conductors 202 and 204. When an end switch or thermal control closes, power returns to the module 434 where it activates the relay 448 (R1) between the signal pin 292 (G) and the power pin 288 (W). This closes two sets of normally open terminals 306 and 308 (T1-T2) and 436 and 438 (C1-C2). As seen in Figure 23, this provides closed switches for the operation of boiler 52 and for a circulating pump 440 or other device.

Referring back to Figure 22, the priority relay module 434 includes a third pair of normally open terminals 302 and 304 connectable to a prioritized terminal, in this case, a domestic hot water tank 443 seen in Figure 23. As seen in Figure 22, the priority relay module includes a fourth pair of normally open terminals 294 and 296 connectable to a circulating pump 444 or other device, seen in Figure 23, for supplying priority heat.

As seen in Figure 22, the priority relay module 434 further includes a second relay 442 (R2) connectable to between terminal 300 and power pin 288 of the module. The second relay 442 (R2) is activated by an external device (thermal or mechanical). The second relay is configured such that when it is activated by the external device, it opens a normally-closed switch 450 associated with first relay 448 (R1), and thereby causes the first pair of terminals 306 and 308 and second pair of terminals 436 and 438 to open, and causes the third pair of terminals 302 and 304 and fourth pair of terminals 294 and 296 to close for activating priority heating 443 and associated pump 444 seen in Figure 23.

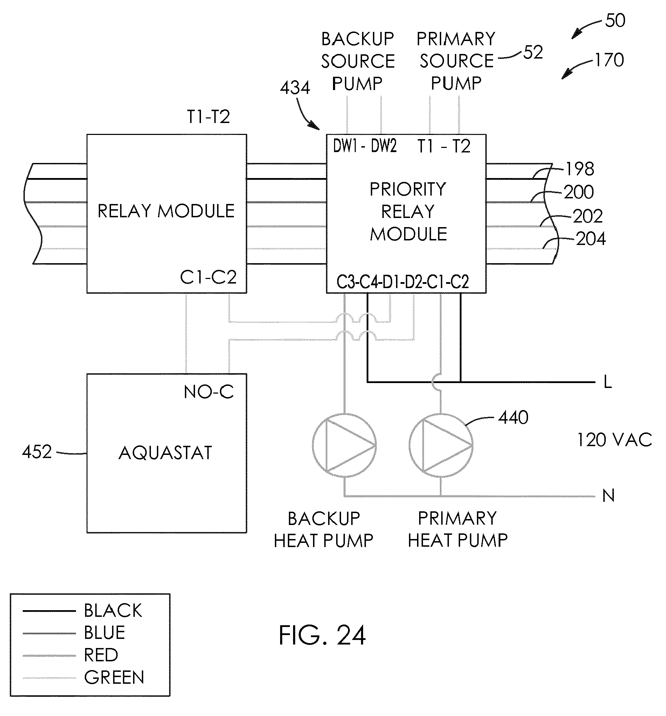

Thus, referring to Figure 22, if a thermal or mechanical switch closes terminals 298 and 300 (D1-D2), such as via aquastat 452 seen in Figure 24 or end switch 76 of zone valve 72 in Figure 23, a second relay 442 seen in Figure 22 is energized between terminal 300 (D2) and the power pin 288 (W). This energized relay (R2) then closes two additional normally open terminals 302 and 304 and 294 and 296 but opens the primary relay 448 (R1), de-energizing the primary relay and breaking contacts for the primary loads (boiler 52 and pump 440 or other devices seen in Figures 23 and 24). The two additional sets of terminals 302 and 304 (DW1-DW2) and 294 and 296 (C3-C4) can then be used for applications such as priority domestic hot water where the boiler's energy is directed solely to hot water production for quicker response and higher volume of hot water for example. When the priority demand is met, the relay returns to the primary operation. The priority relay module 434 may be suited for applications where a priority for domestic hot water (DHW) is required or where a backup source of heat is provided when a primary source of heat is insufficient.

For a multiple temperature system, the pump module 405 seen in Figure 16 may be used to separate the terminals for boiler activation from the primary call for heat. Many current boilers are capable of supplying more than one operating temperature. The aquastat on the domestic hot water storage tank provides the call for priority domestic hot water. The associated zone module opens the corresponding zone control valve and sends the closed end switch signal to the priority relay module. This closes terminals for the priority side of the relay and opens the call for heating, providing full boiler focus on delivering quick, high quantity domestic hot water.

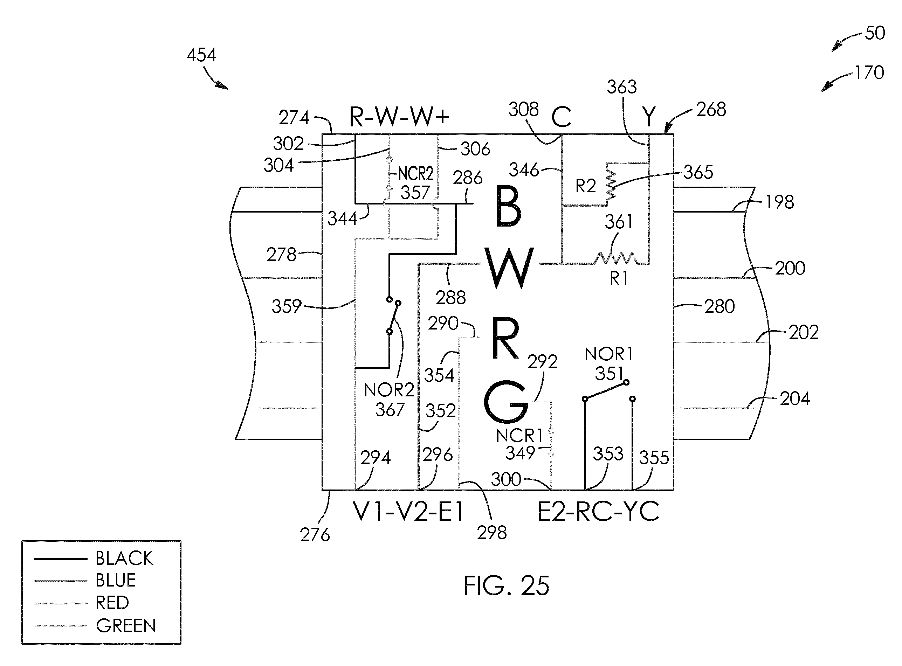

As seen in Figure 25, the modular wiring assembly 170 may further include a hot/cold zone module 454. This is a relay module which is suitable for use in arid climates and places where heat pumps (air-water or ground source) are used to heat water for in-floor radiant systems during cooler periods and to circulate cooler water through the same tubing during warmer periods. The hot/cold zone module 454 includes a series of electrical conductors, in this example wires, including: wire 344 connecting terminal 302 to power pin 286 (B); wire 359 connecting terminals 306 (W+) and 294 (V1) together; wire 352 connecting terminal 296 (V2) and power pin 288 (W) together; and wire 354 connecting terminal 298 (E1) and signal pin 290 (R) together; and wire 346 connecting terminal 308 (C) and power pin 288 (W) together.

The hot/cold zone module 454 includes a first relay 361 (R1) interposed between power pin 288 (W) and an additional terminal 363 (Y) of the module. The hot/cold zone module includes a second relay 365 (R2) interposed between power pin 288 (W) and terminal 363 (Y) of the module. The relays 361 and 365 are also interposed between terminal 363 and wire 346.

The hot/cold zone module 454 has four switches in this example, including a normally closed switch 357 (NCR2) interposed between terminals 304 (W) and 294 (V1), said terminals thus connecting together when the switch is closed. This switch is opened when relay 365 (R2) is energized. A normally open switch 367 (NOR2) is interposed between terminal 294 (V1) and pin 286 (B). Switch 367 is closed to connect terminal 294 and pin 286 together when relay 365 (R2) is energized. A normally closed switch 349 (NCR1) is interposed between terminal 300 (E2) and signal pin 292 (G), thereby connecting terminal 300 and pin 292 together when the switch is in its closed state. Switch 349 is opened when relay 361 (R1) is energized. A normally open switch 351 (NOR1) is interposed between terminals 353 (RC) and 355 (YC). Switch 351 closes when relay 361 (R1) is energized, thereby connecting together terminals 353 and 355.

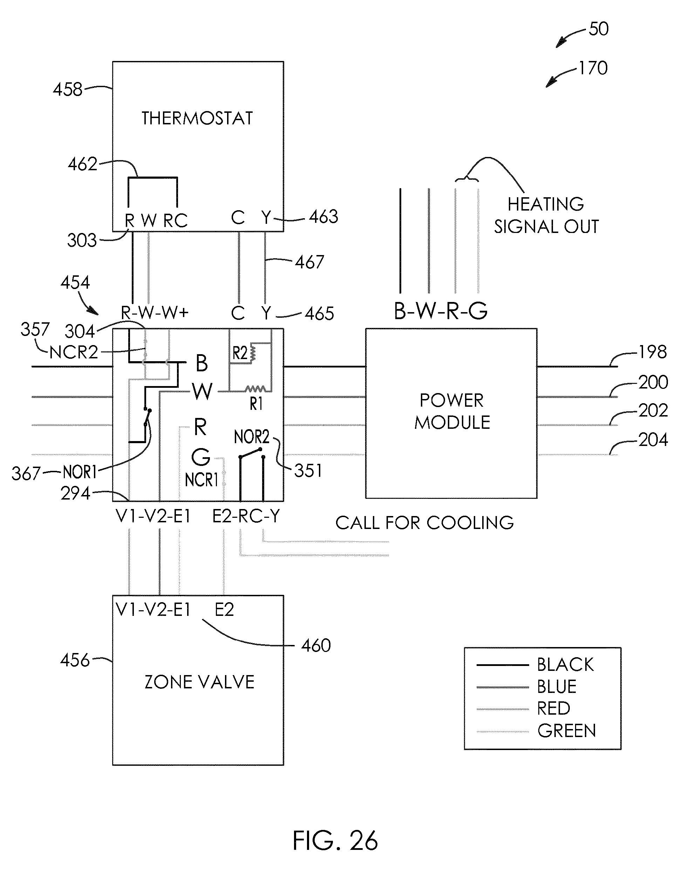

Under no call for heat or cooling, power is routed from the pin 286 (B) to the terminal 302 (R) and, as seen in Figure 26, through to the corresponding terminal 303 (R) of the thermostat 458.

On a call for heat (fall in temperature), the R-W terminals close in the thermostat and power is routed back to the terminal 304 (W) of the module 454 seen in Figure 25. As switch 357 is normally closed, power continues to terminal 294 (V1) and energizes the zone valve 456 seen in Figure 26. The circuit is completed when power continues to neutral via terminal 296 (V2) of module 454 seen in Figure 25, wire 352 and pin 288 (W). Referring back to Figure 263, when the zone valve 456 fully opens, the valve end switch 460 closes and, as switch 349 seen in Figure 25 is normally closed, signal power is routed from the pin 290 (R) through terminal 298 (E1) through the valve end switch 460 seen in Figure 26, back through terminal 300 (E2) seen in Figure 25 and on to the signal pin 292 (G).

Thus, the relays cause the normally closed zone control valve 456 seen in Figure 26 to open on a call for heat with a thermostat 458 which closes on temperature fall and closes on a call for cooling on temperature rise. End switch contacts are broken on a call for cooling to stop activation of heating when the heat pump is in cooling mode. Switchover between heating and cooling should be manually adjusted. On a call for heat and referring to Figure 25, power is routed from power pin 286 (B) to the terminal 302 (R), through the heating contacts of a thermostat capable of heating and cooling. Power is returned to the module 454 on the terminal 304 (W) where it is able to provide power for a zone control valve (or other device) at terminals 294 and 296 (V1-V2). Referring to Figure 26, once the zone control valve 456 is open, its end switch 460 completes the signal circuit at terminals 298 and 300 (E1-E2) of the module seen in Figure 25. This will start the heating side of the heat pump.

For cooling operation and as seen in Figure 26, a jumper wire 462 should be installed at the thermostat 458 between terminals R-RC. This allows power from the transformer module to energize the cooling side of the thermostat. On a call for cooling, power is routed through terminal 463 of the thermostat 458, terminal 465 Y and wire 467 which extends between and connects together the terminals. Referring to Figure 25, this will energize relays 361 and 365 to allow power from the power pin 286 (B) to the terminal 294 (V1) and open the zone control valve 456 while breaking contacts on the signal circuit, thereby avoiding a call for heat when the heat pump is in cooling mode. Normally open terminals 353 and 355 (RC-YC) located at the bottom end 276 of the module 454 now close the signal circuit for cooling at the heat pump.

Thus, on a call for cooling (rise in temperature) and referring to Figure 26, the RC-Y terminals close because of the thermostat jumper wire 462 (R-RC) in the thermostat 458, and power is routed back to the top terminal 363 (Y) of the thermostat. Referring to Figure 25, this energizes both relay 361 (R1) and relay 365 (R2). The circuit completes as power continues to neutral at the power pin 288 (W). When the two relays are energized, the normally open switches NOR1 (367) and NOR2 (351) close and the normally closed switches NCR1 (349) and NCR2 (357) open, breaking power through those circuits.

When switch 351 (NOR1) closes, power is routed from the pin 286 (B) to terminal 294 (V1). This energizes the zone valve 456 seen in Figure 26 through terminal 294 (V1) and power then runs to neutral via terminal 296 (V2) of the module pin 288 (W) of the module. The opening of switch 357 (NCR2) inhibits the chances of terminals 302 and 304 (R-W) being energized during a call for cooling at the thermostat (i.e. with a short). Even when the zone valve 456 seen in Figure 26 is fully open during a call for cooling and the end switch 460 closes, heating will not be activated as switch 349 (NCR1) seen in Figure 25 is now open. Switch 367 (NOR1) closes and is able to energize zone valve 456 seen in Figure 26 through terminal 294 (V1).

Switch 351 (NOR2) closes and is able to activate the cooling cycle of the heat pump. When switch 351 (NOR1) closes, power is also routed to terminal 306 (W+). With the normally-closed switch 349 (NCR1) open on a call for cooling, there is still power at W+. This allows additional daisy-chained valves/motors to be powered during heating or cooling. If this was not there, the additional valves would only work in heating mode.

In both heating and cooling, an industry-standard, normally closed zone valve is opened, allowing flow of either heated or cooled fluid. The relays close the necessary circuits to complete the call for heat or cooling while ensuring both cannot run at the same time.

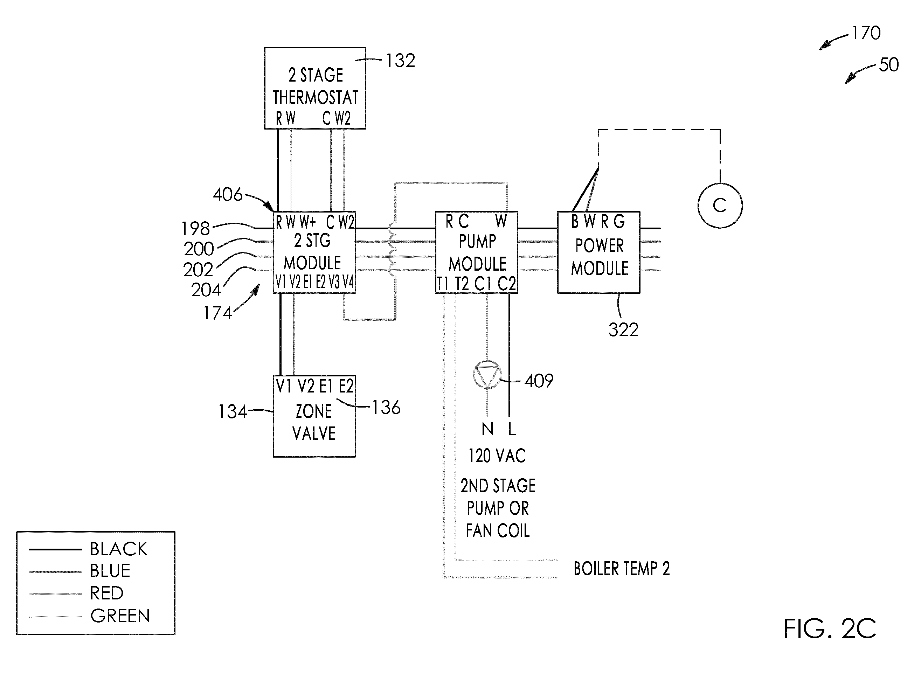

In summary and referring to Figure 2D, 24V power is supplied by the transformer module 222 to the primary track 172. Power is drawn onto the various ones of the modules in the assembly 170 via B-W pins as seen by pins 198 and 200 for zone module 268 in Figure 8. Referring back to Figure 2D, the power modules 262, 264 and 320 on the primary track 172 transfer 24V power to power modules 322, 324 and 326 on remote tracks 174, 176 and 178, respectively, seen in Figures 2A to 2C. 24V power is then made available throughout each of the remote tracks on the top two conductors 198 and 200. Referring to Figures 2A to 2D, power is used by the zone modules 266, 335, 336, 338, 340, 342 and 345 and the two-stage zone module 406 seen in Figure 2C to provide power to each thermostat or aquastat. On a call for heat, power is redirected back to the zone modules where they energize their respective zone control valves, such as zone control valves 120 and 126 for zone modules 335 and 336 seen in Figure 2A. On zones with multiple zone control motors as seen in Figure 2B, wire 386 is connected between terminal 308 (W+) of a first zone module 338 to terminal (306) W of a second zone module 340.

For zones requiring circulators or fans, the relay module 390 seen in Figure 14 uses power from the top two conductors 198 and 200 to energize the signal conductors 202 and 204. On a call for heat, this energizes relay 394 and closes normally open switches/contacts 402 and 404 for activation of the circulator and boiler. Boiler signal connection is taken from the relay when a relay is used as power source for the end switch must come from the boiler (or other equipment).

Referring back to Figures 2A to 2D, an arrangement of modules are thus attached to the tracks 172, 174, 176 and 178 to ensure a trouble free connection of thermal controls (thermostats, aquastats) to associated zone control valves and circulating pumps. Wiring from the remote tracks 174, 176 and 178 is routed back to the primary track 172 to complete the necessary circuits, which then control operation of the boiler 52, and circulating pumps 60, 70, 74, 96, 99 and 101 seen in Figure 1 and other devices and equipment of the hydronic system 50. Due to the modular approach of the controls, the hydronic system as herein described can be configured in many different ways depending upon the application involved.

The hydronic system 50 as herein described is thus directed to a highly modular control and wiring system for use in the multi-zone hydronic heating industry. Hydronic systems are used to distribute hot water in buildings for radiators, in-floor and ceiling mounted radiant heating panels and other hot water heating elements. The modular track wiring assembly 70 as herein described may comprise an easy-to-use control system alleviating many of the installation, service and renovation problems and errors the industry currently experiences.

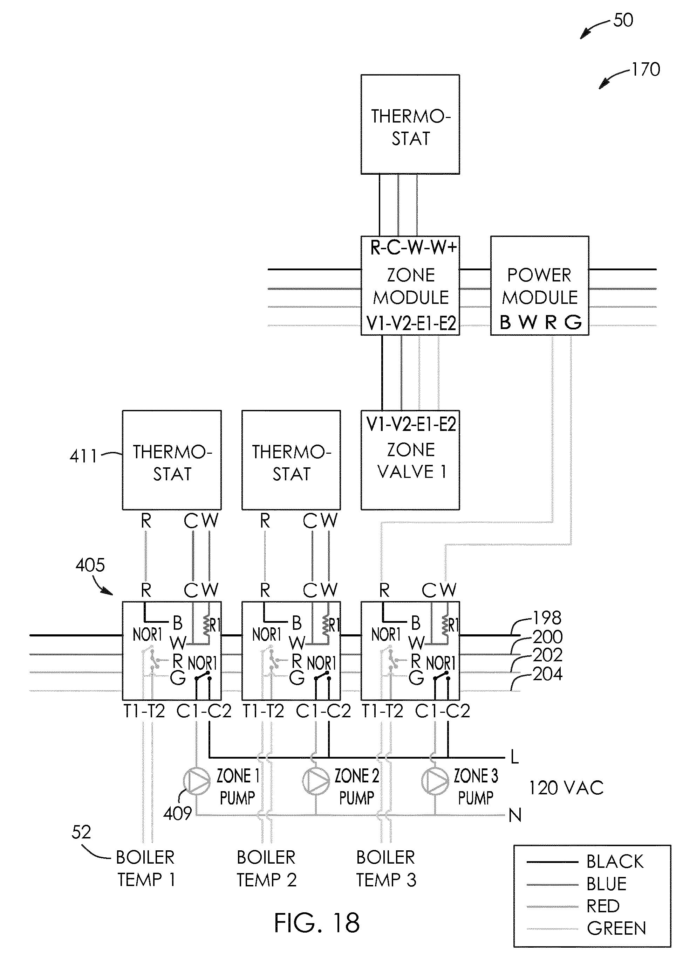

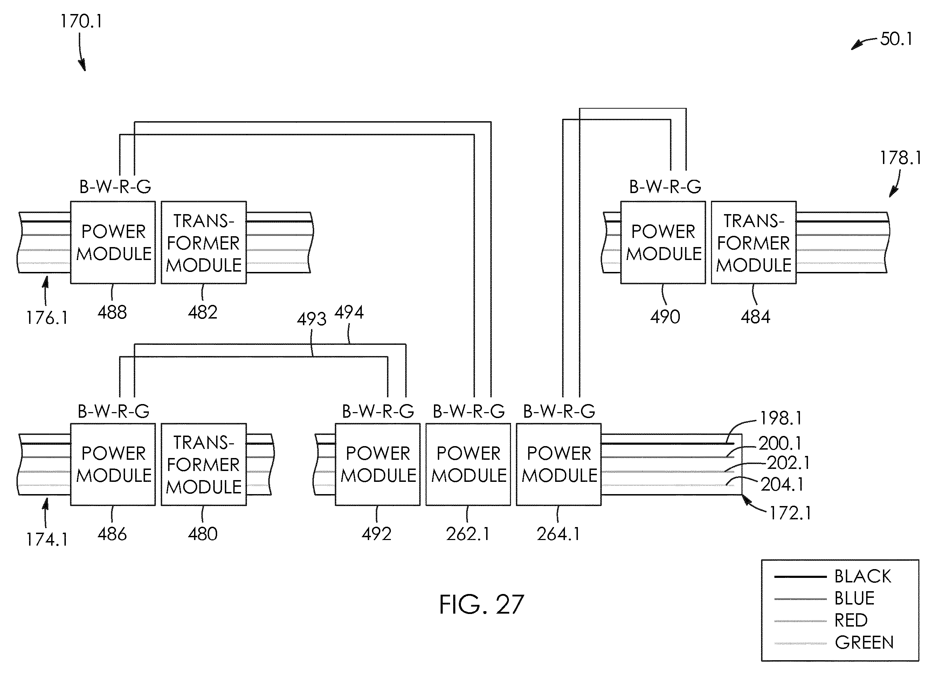

Figure 27 shows part of a modular wiring assembly 170.1 for a hydronic system 50.1 according to a second aspect. Like parts have like numbers and functions as the modular wiring assembly 170 and system 50 shown in Figures 1 to 26 with the addition of decimal extension ".1". Assembly 170.1 and system 50.1 are substantially the same as assembly 170 and system 50 shown in Figures 1 to 26 with the following exceptions.

In this example, assembly 170.1 includes a plurality of transformer modules 480, 482 and 484 coupled to remote tracks 174.1, 176.1 and 178.1, respectively. Each of the transformer modules is substantially similar to transformer module 222 seen in Figure 5.

As seen in Figure 27, the modular wiring assembly 170.1 further includes a plurality of power modules 486, 488, and 490 coupled to tracks 174.1, 176.1, and 178.1, respectively. Each of the power modules is substantially similar to module 262.1. The assembly 170.1 further includes a plurality of power modules 492, 262.1, and 264.1 configured to couple with power modular 486, 488 and 490, respectively, for connecting the signal conductors 202.1 and 204.1 of the tracks 172.1, 174.1, 176.1 and 178.1 together via a series of electrical conductors, in this example wires as seen by wires 493 and 494. In assembly 170.1, each of the remote tracks thus has its own remote transformer module 480, 482 and 482 for supplying power to its respective power conductors.

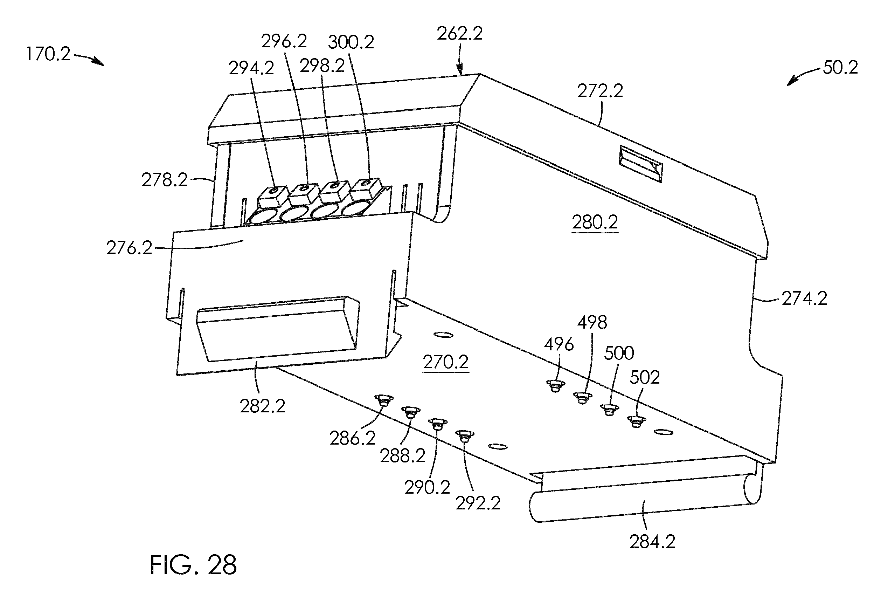

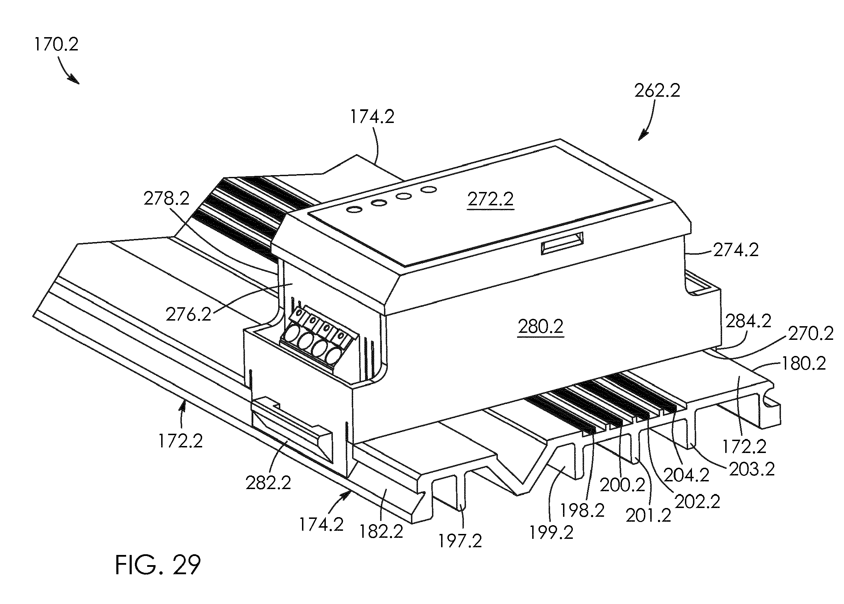

Figures 28 and 29 show part of a modular wiring assembly 170.2 for a hydronic system 50.2 according to a third aspect. Like parts have like numbers and functions as the modular wiring assembly 170 and system 50 shown in Figures 1 to 26 with the addition of decimal extension ".2". Assembly 170.2 and system 50.2 are substantially the same as assembly 170 and system 50 shown in Figures 1 to 26 with the following exceptions.

Referring to Figure 28, power module 262.2 include a first plurality of leads or pins 286.2, 288.2, 290.2 and 292.2 connectable to track 172.2 seen in Figure 29. The power module includes a second plurality of leads or pins 496, 498, 500 and 502 seen in Figure 28 connectable to track 174.2 seen in Figure 29. Pins 286.2, 288.2, 290.2 and 292.2 are electrically coupled to respective ones of pins 496, 498, 500 and 502. Power module 262.2 is thus configured to couple the tracks 172.2 and 174.2 and respective ones of the power and signal conductors 198.2, 200.2, 202.2 and 204.2 of the tracks together. In this manner, the effective length of the track may be extended by joining tracks 172.2 and 174.2 together by the use of two sets of pins.

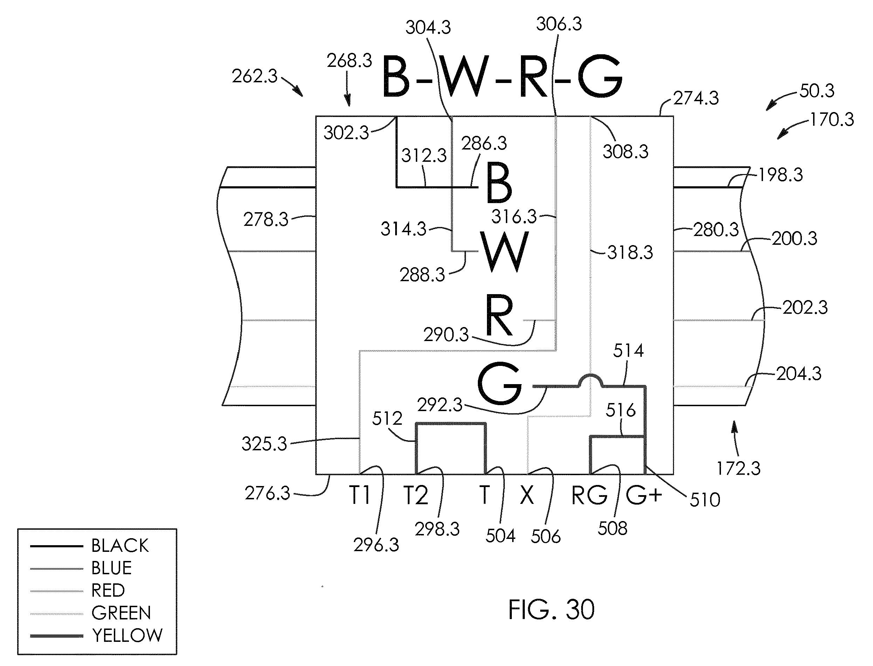

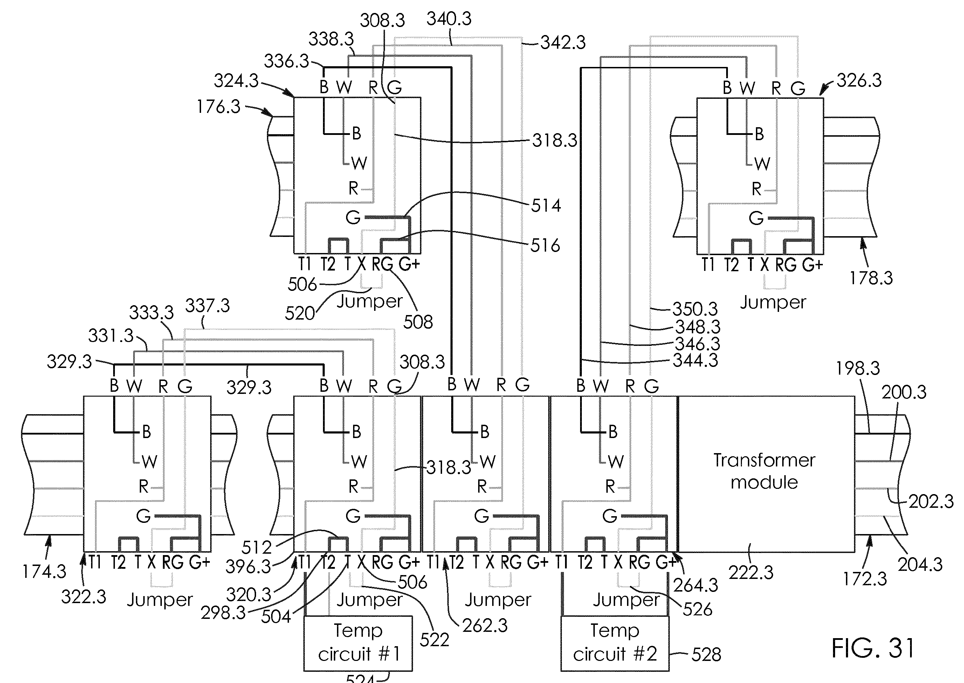

Figures 30 and 31 show part of a modular wiring assembly 170.3 for a hydronic system 50.3 according to a fourth aspect. Like parts have like numbers and functions as the modular wiring assembly 170 and system 50 shown in Figures 1 to 26 with the addition of decimal extension ".3". Assembly 170.3 and system 50.3 are substantially the same as assembly 170 and system 50 shown in Figures 1 to 26 with the following exceptions.

In this case, each of the power modules 262.3 includes conductors and terminals which may increase the flexibility of assembly 170.3. In particular, each of the power modules 262.3 in this embodiment includes for its first plurality of spaced-apart terminals: six terminals 296.3 (T1), 298.3 (T2), 504 (T), 506 (X), 508 (RG) and 510 (G+). For its second plurality of spaced-apart terminals, terminal 302.3 is associated with the letter B (black), terminal 304.3 is associated with the letter W (white), terminal 306.3 is associated with the letter R (red), and terminal 308.3 is associated with the letter G (green).

In this example: conductor 312.3 electrically connects together power pin 286.3 (B) and terminal 302.3; conductor 314.3 electrical connects together power pin 288.3 (W) and terminal 304.3; conductor 316.3 electrically connects together signal pin 290.3 (R) and terminal 306.3; conductor 325.3 electrically connects together signal pin 290.3 (R) and terminal 296.3 (T1); conductor 512 electrically connects together terminals 298.3 (T2) and 504 (T); conductor 318.3 electrically connects together terminal 308.3 with terminal 506 (X); conductor 514 electrically connects together signal pin 292.3 (G) and terminal 510 (G+); and conductor 516 electrically connects to and extends from conductor 514 and couples with terminal 508 (RG). The latter thus electrically connects together signal pin 292.3 (G) and terminal 508 (RG).

If the power module is needed for a single temperature system, as seen by module 324.3 in Figure 31, the assembly 170.3 includes a further wire, in this example a jumper wire 520. The jumper wire electrically couples together terminals 506 (X) and 508 (RG). In this manner, terminal 308.3 (G) is thus electrically connected to signal pin 292.3 (G) via conductor 318.3, wire 520, conductor 516 and conductor 514.

If the power module is needed for a multiple temperature system, as seen by module 320.2 in Figure 31, the assembly 170.3 may include an additional wire in this example jumper wire 522. The jumper wire electrically couples together terminals 504 (T) and 506 (X). In this manner, terminal 308.3 (G) is thus electrically connected to terminal 298.3 (T2) via conductor 318.3, jumper wire 522 and conductor 512. Terminals 296.3 (T1) and 298.3 (T2) may thereafter be coupled to a first temperature circuit 524. This configuration may be used to connect the boiler to the power module for a heat demand other than the primary source when using a relay for the primary heat demand.

Module 264.3 includes a jumper wire 526 between its terminals X and RG and may include a second temperature circuit 528 coupled to its terminals T1 and G+. Thus, the power modules of this embodiment include additional connections for a boiler on a single temperature system T1 - G+, for example.

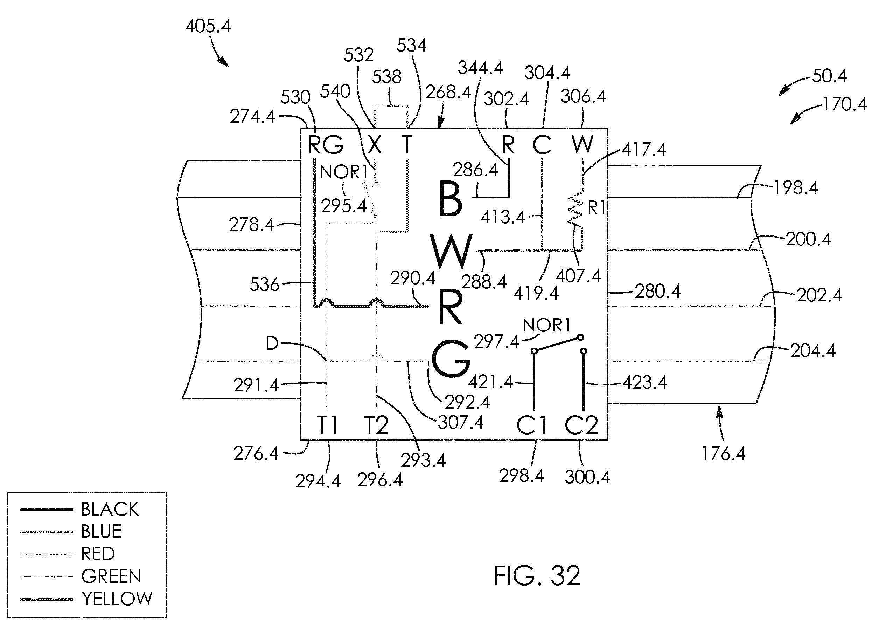

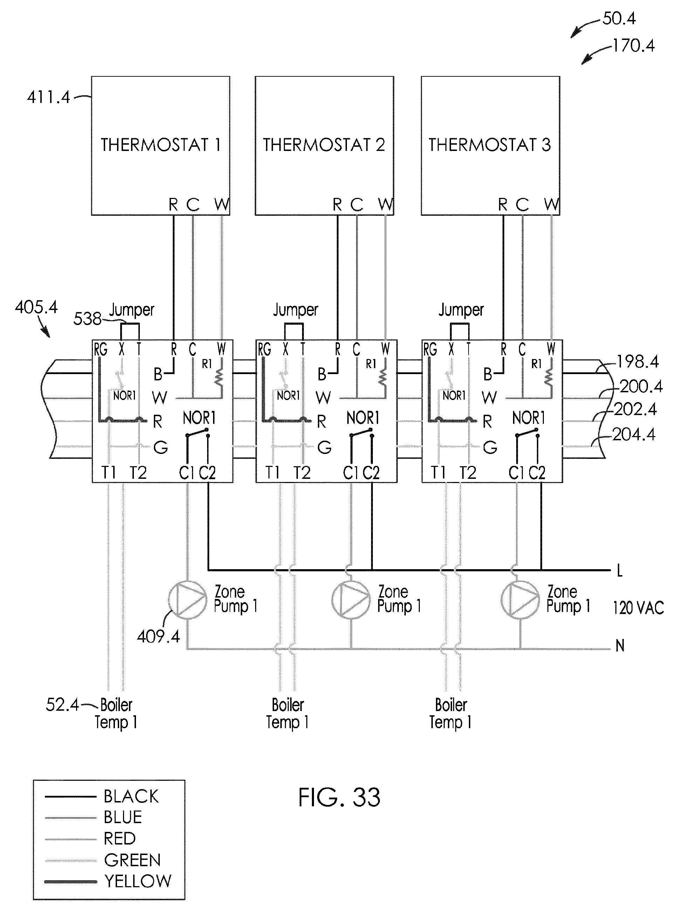

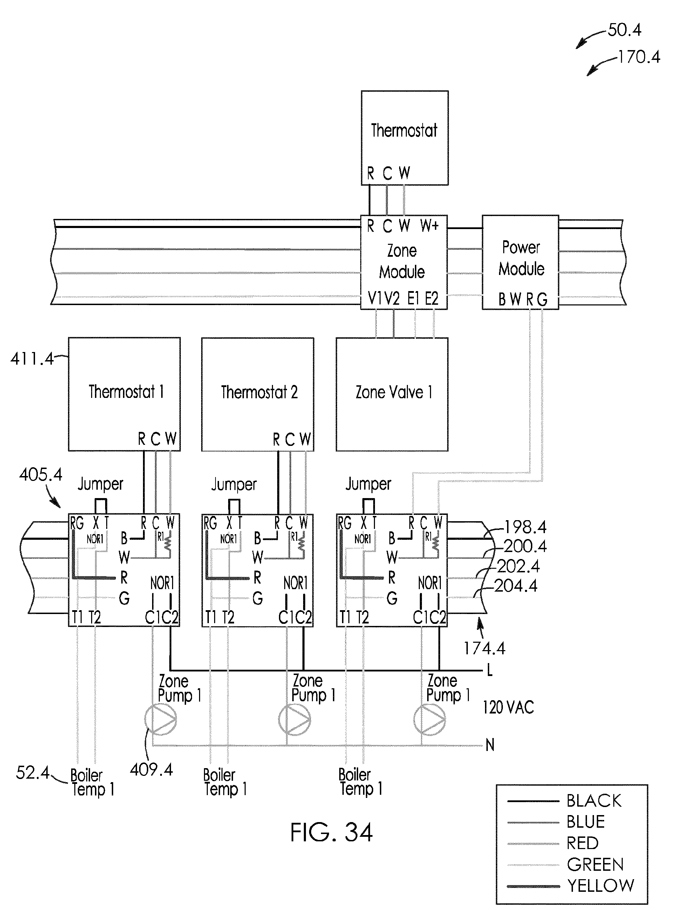

Figures 32 to 34 show part of a modular wiring assembly 170.4 for a hydronic system 50.4 according to a fifth aspect. Like parts have like numbers and functions as the modular wiring assembly 170 and system 50 shown in Figures 1 to 26 with the addition of decimal extension ".4". Assembly 170.4 and system 50.4 are substantially the same as assembly 170 and system 50 shown in Figures 1 to 26 with the following exceptions.

In this case, the push button switch 299 of pump module 405 seen in Figure 16 has been removed and replaced with a method of providing the same effect by adding a conductor, in this example a jumper wire 538 to the pump module seen in Figure 32. The jumper adds a signal connection to the 294.4 (T1) - 296.4(T2) connections. Each of the pump modules 405.4 in this embodiment includes for its second plurality of spaced-apart terminals six terminal, including terminal 530 (RG), terminal 532 (X), terminal 534 (T), terminal 302.4 (R), terminal 304.4 (C), and terminal 306.4 (W).

Terminal 530 (RG) electrically couples to signal pin 290.4 (R) via conductor 536. The jumper wire 538 electrically couples terminals 532 (X) and 534 (T) together. A conductor 540 extends between terminal 532 (X) and normally open switch 295.4 (NOR1). Conductor 291.4 extends between terminal 294.4 (T1) and the normally open switch 295.4 (NOR1). Conductor 291.4 couples to signal pin 292.4 (G) via wiring junction D and conductor 307.4. Conductor 293.4 extends between and electrically connects together terminals 534 (T) and 296.4 (T2). Thus, when switch 295.4 (NOR1) closes, terminal 294.4 (T1) electrically connects to terminal 296.4 (T2) via conductor 291.4, conductor 540, terminal 532 (X), jumper wire 538, terminal 534 (T) and conductor 293.4.

Terminal 302.4 (R) electrically couples to power pin 286.4 (B) via conductor 344.4. Terminal 304.4 (C) electrically couples to power pin 288.4 (W) via conductor 413.4. Conductor 417.4 extends between and electrically connects together terminal 306.4 (W) and relay 407.4 (R1). Conductor 419.4 extends between and electrically connects together power pin 288.4 (W) and relay 407.4 (R1). Conductors 413.4 and 419.4 also couple together. Conductor 421.4 extends between and electrically connects together normally open switch 297.4 (NOR1) and terminal 298.4 (C1). Conductor 423.4 extends between and electrically connects together switch 297.4 (NOR1) and terminal 300.4 (C2).

Pump module 405.4 so configured may thus inhibit a potential unwanted or improper operation. Also, the uniformity of providing multiple modules with six terminals may function to reduce cost.

In this case the pump module 405.4 thus includes conductors and terminals which may increase the flexibility of assembly 170.4. In particular, each of the pump modules 405.4 in this embodiment includes for its first plurality of spaced-apart terminals: four terminals 294.4 (T1), 296.4 (T2), 298.4 (C1) and 300.4 (C2). For its second plurality of spaced-apart terminals, 274.4 (RG), 532 (X), 534 (T), 302.4 (R), 304.4 (C) and 304.4 (W).

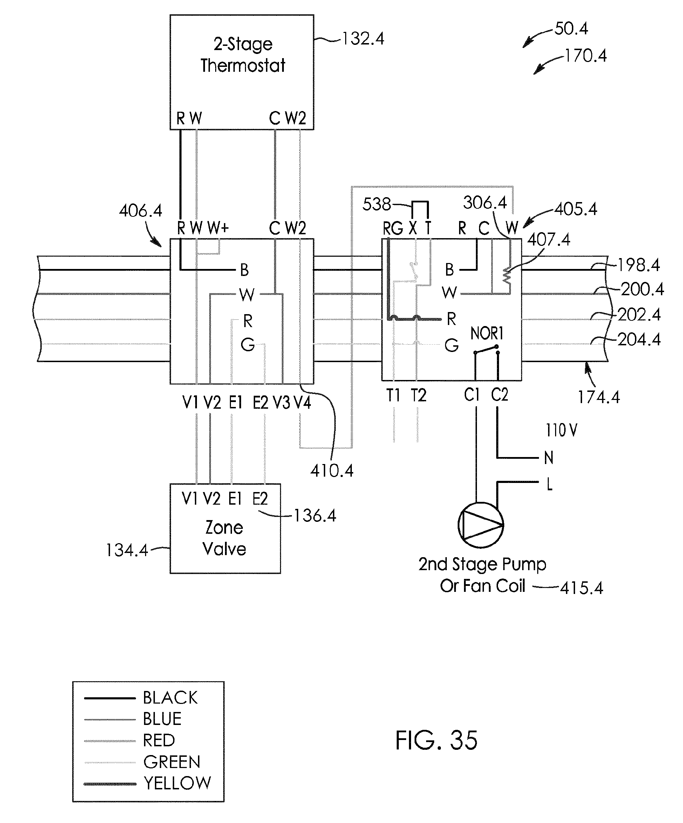

Alternatively and as seen in Figure 35, terminal 410.4 of two-stage zone module 406.4 may couple to terminal 306.4 and relay 407.4 of pump module 405.4 for other uses such as a fan coil unit or circulator 415.4. The two-stage zone module includes diagnostic lights to indicate the presence of 24V power, when the thermostat 132.4 is closed, when the end switch 136.4 of the primary zone valve 134.4 is closed (call for heat) and when activation of second stage heating has occurred, for example.

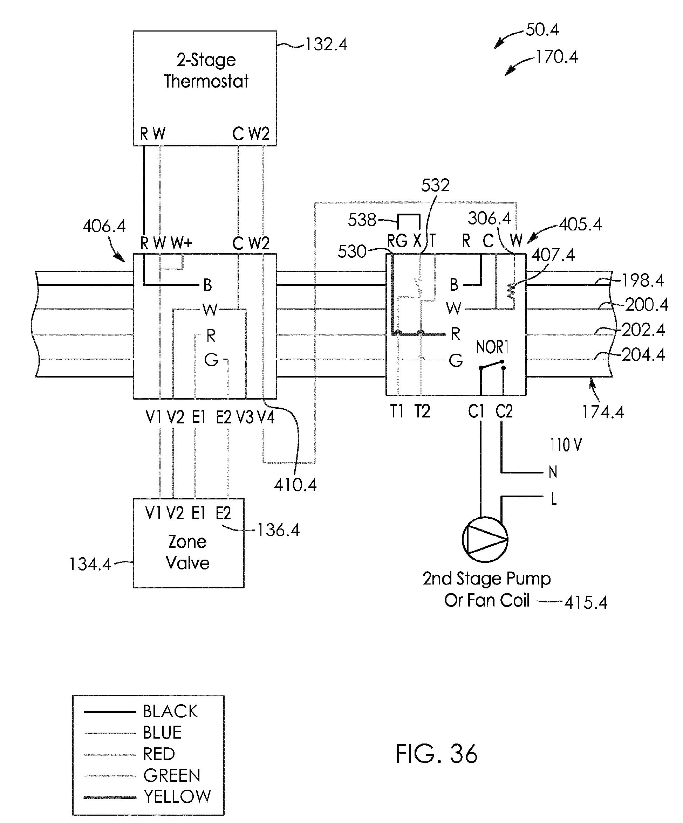

Figure 36 is substantially the same as Figure 35 with the exception that jumper wire 538 extends between and electrically couples together terminal 530 (RG), terminals 532 (X) of pump module 405.4. The jumper wire thus adds a signal connection to the track via signal pins 290.4 and 292.4.

The term module as herein described may be replaced by the term plug.

As described above, all of the necessary relay wiring is integral to respective given ones of the modules of the assembly 170 as herein described. Also, the hydronic system 50 as herein described does not require any twist on wiring connectors, such as marrettes (trademark), for the installation thereof and may thus be simpler and easier to install compared to existing manners of wiring hydronic systems. The hydronic system as herein described may thus inhibit and reduce errors with site wired installations.

The modules of the assembly 170 as herein described may provide the ability to vary each installation to suit a specific system design and function with options to add relays for circulation pumps, priority operation of domestic hot water or functions such as primary and secondary heat sources.

The various modules described herein may be referred to as one or more means for electrically coupling thermostats and zone valves of the respective one of the zones together for selectively heating/cooling said respective ones of said zones.

### ADDITIONAL DESCRIPTION

Examples of modular tracks for a hydronic system have been described. The following clauses are offered as further description:
(1) A modular track wiring assembly for a hydronic system, a first zone thereof having a zone temperature, the first zone including a temperature-sensing device which outputs a valve-actuation signal upon the zone temperature deviating from a threshold temperature range and the first zone including a zone valve having an end switch which outputs a call for heat/cold signal when the zone valve is fully open, the assembly comprising: an elongate track including a pair of power conductors extending therealong, the power conductors being configured to supply electrical energy, and a pair of signal conductors extending therealong, the signal conductors being configured to convey signals; and a zone module connectable to and receiving electrical energy from said track, the zone module connecting the temperature-sensing device to the zone valve such that the zone valve is powered to open upon receiving said valve-actuation signal, and the zone module connecting the end switch to said signal conductors for conveying a call for heat/cold signal when said zone valve is fully open.
(2) The assembly of clause 1, the hydronic system including an additional zone having a temperature-sensing device, a zone valve and an end switch, and wherein the assembly includes an additional zone module connectable to and receiving electrical energy from said track, the additional zone module connecting the temperature-sensing device of the additional zone to the zone valve of the additional zone such that the zone valve of the additional zone is powered to open upon receiving a valve-actuation signal from the temperature-sensing device of the additional zone, and the additional zone module connecting the end switch of the zone valve of the additional zone to said signal conductors for conveying a call for heat/cold signal therealong when said zone valve of the additional zone is fully open.
(3) The assembly of clause 1, wherein the zone module is a first zone module associated with the first zone, the track is a first track, the system includes a second zone having components substantially similar to the first zone, and the assembly further includes: a second zone module substantially similar to the first zone module and being associated with the second zone; a second track substantially similar to the first track and to which the second zone module is connectable and receives electrical energy therefrom; and a pair of power modules connectable to respective ones of the tracks, the power modules being configured to connect respective ones of the power and signal conductors of the tracks together.
(4) The assembly of clause 1, wherein the zone module is a first zone module associated with the first zone, the track is a first track, the system includes a second zone having components substantially similar to the first zone, and the assembly further includes: a second zone module substantially similar to the first zone module and being associated with the second zone; a second track substantially similar to the first track and to which the second zone module is connectable and receives electrical energy therefrom; and a power module having a first plurality of leads connectable to a first of the tracks and a second plurality of leads connectable to a second of the tracks, the second plurality of leads being electrically connected to respective ones of the first plurality of leads, and the power module being configured to connect together the tracks and respective ones of the power and signal conductors of the tracks.
(5) The assembly of clause 1, the temperature-sensing device being a two-stage thermostat which outputs an additional valve-actuation signal should the zone temperature deviate from the threshold temperature range after a set amount of time, the zone including an additional zone valve, and wherein the zone module is a two-stage zone module configured to connect the temperature-sensing device to the additional zone valve such that the additional zone valve is powered to open upon receiving said additional valve-actuation signal.
(6) The assembly of clause 1, the temperature-sensing device being a two-stage thermostat which outputs a call for additional heating/cooling signal should the zone temperature deviate from the threshold temperature after a set amount of time, and wherein the zone module is a two-stage zone module being configured to energize a relay for operating an additional heating/cooling unit upon receiving said additional heating/cooling signal.
(7) The assembly of any one of clauses 1 to 6, further including a relay module selectively connectable to said track, the relay module including a first pair of normally open terminals connectable to a heat/cold source of the system, a second pair of normally open terminals connectable to a circulating pump of the zone, and a relay activated by said call for heat/cold signal, the relay so activated causing said first pair of terminals to connect together for activating the heat/cold source and causing said second pair of terminals to connect together for actuating the pump.
(8) The assembly one of any one of clauses 1 to 7, the hydronic system having a priority zone and a prioritized circulating pump, and the assembly further including a priority relay module selectively connectable to said track, the priority relay module including a first pair of normally open terminals connectable to a primary heat/cold source of the system, a second pair of normally open terminals connectable to a circulating pump of the zone, a third pair of normally open terminals connectable to a backup heat/cold source of the system, a fourth pair of normally open terminals connectable to the prioritized circulating pump of the priority zone, a first relay activated by said call for heat/cold signal, the first relay so activated being configured to cause the priority relay module to connect respective ones of the power conductors to respective ones of the signal conductors, cause said first pair of terminals to connect together for actuating the heat/cold source and cause said second pair of terminals to connect together for actuating the pump, and a second relay activated by an external device of the system, the second relay so activated being configured to cause the first and second pair of terminals to open and cause the third and fourth pairs of terminals to close for activating said backup heat/cold source.
(9) The assembly of any one of clauses 1 to 8, further including a transformer module connectable to said track, the transformer module connectable to a high voltage source and including a transformer configured to transform a high input voltage from said high voltage source to a low output voltage and supply the power conductors of the track with electrical energy having said low output voltage thereafter.
(10) The assembly of any one of clauses 1 to 9, wherein the temperature sensing device is a thermostat.
(11) The assembly of any one of clauses 1 to 9, wherein the temperature sensing device is an aquastat.
(12) A hydronic system comprising: at least one zone having a zone temperature, including a temperature-sensing device which outputs a valve-actuation signal upon said zone temperature deviating from a threshold temperature range, and including a zone valve having an end switch which outputs a call for heat/cold signal when the zone valve is fully open; and the modular track wiring assembly of clause 1.
(13) The system of clause 12 wherein the zone valve includes a zone valve motor, wherein the zone module is configured to provide power via said power conductors to said zone valve motor for selectively opening and closing the zone valve, and wherein the system further includes a heat/cold source, the signal conductors being in communication with said heat/cold source, the heat/cold source being configured to supply heat/cold to said zone upon receiving the call to heat/cold signal.
(14) The system of clause 12, further including a fluid loop, the zones valve when opened being configured to selectively enable fluid from said loop to circulate within said zone, and a heat/cold source, the heat/cold source being configured to supply heat/cold to said fluid upon receiving the call to heat/cold signal.
(15) A hydronic system for a plurality of zones, the system comprising: a wiring track including a pair of power conductors supplying electrical energy therealong and a pair of signal conductors, the signal conductors being in communication with a heat/cold source; and a plurality of zone modules, each corresponding to respective ones of said zones, including leads which connect to respective ones of the conductors, and including terminals and conductors configured to selectively connect respective thermostats and zone valves of their respective one of the zones together, receive signals therefrom and convey said signals via the signal conductors to the heat/cold source for selectively heating/cooling said respective ones of said zones.
(16) The system of clause 15 wherein the leads are in the form of a plurality of outwardly-biased, spring-loaded pins which engage with the conductors.
(17) The system of any one of clauses 15 and 16, wherein said signals include end switch signals of the zone valves which indicate that the zone valves are fully open, and wherein the modules via their terminals electrically connect to the respective ones of the thermostats and zone valves together, power the thermostats and zone valves via the power conductors, are configured receive said end switch signals when their respective ones of the zone valves are fully open, and are configured to convey said signals along the signal conductors thereafter to call for heat/cold.
(18) A zone module for the hydronic system in any one of clauses 15 and 16, wherein the leads of each of the modules include a pair of power leads for connecting with the power conductors and a pair of signal leads for connecting with the signal conductors, and wherein the terminals of each of the modules include a thermostat input terminal for connecting a respective one of the thermostats to a first of the power leads, a thermostat output terminal for receiving a valve-actuation signal from the respective one of the thermostats, a zone valve input terminal in communication with the thermostat output terminal, the zone valve opening upon receiving said valve-actuation signal, a zone valve output terminal for connecting a corresponding one of the zone valves to a second of the power leads, an end switch input terminal for connecting the end switch of the corresponding one of zone valves to a first of the signal leads, the end switch of the corresponding one of zone valves outputting a call for heat/cold signal upon the corresponding one of the zone valves being fully open, and an end switch output terminal for receiving said call for heat/cold signal, the end switch output terminal being in communication with a second of the signal leads.
(19) A modular track for a hydronic system, the track being elongate and planar and comprising: a pair of spaced-apart power conductors for supplying electrical energy, the power conductors being connectable to an electrical power source; and a pair of signal conductors, the signal conductors being configured to receive mechanical/thermal control signals from a plurality of zones and convey said signals to a heat/cold source actuator.
(20) The track of clause 19 wherein the track is shaped to couple with a plurality of modules, wherein the track has a pair of spaced-apart, longitudinally-extending recessed edge portions of shaped differently from each other and wherein each of the modules includes corresponding spaced-apart male projections of different shapes configured to be received by respective ones of said recessed edge portions of the track.
(21) A hydronic system comprising the track of clause 19, the track having a pair of spaced-apart longitudinally-extending edge portions, a first being in the shape of one of a rounded recessed member and a rounded projection and a second being in the shape of one of a catch and a recessed member shaped for snap-fit connection with said catch, and the system further including a plurality of modules, each of the modules including a pair of spaced-apart protrusions shaped to connect with said edge portions of the track with a first of the protrusions being in the shape of another of the rounded recessed member and the rounded projection and a second of the protrusions being the shape of another of the catch and the recessed member shaped for snap-fit connection said catch.
(22) A modular track wiring assembly for a hydronic system, a zone thereof having a zone temperature and including a temperature-sensing device which outputs a pump actuation signal upon the zone temperature deviating from a threshold temperature range, the assembly comprising: an elongate track including a pair of power conductors extending therealong and configured to supply electrical energy; and a pump module connectable to and receiving electrical energy from said track, the module including a pair of normally-open terminals connectable to a circulating pump and a relay activated by said pump actuation signal, whereby actuation of the relay causes the terminals to close for actuating the circulating pump.
(23) The assembly of clause 22, wherein the elongate track includes a pair of signal conductors configured to convey signals, and wherein the pump module further includes an additional pair of normally-open terminals connectable to a boiler, the additional pair of normally-open terminals connecting together upon activation of the relay to call for a heat/cold of a certain temperature from the boiler.
(24) A modular track wiring assembly for a hydronic system having multiple zones, the assembly comprising: an elongate track including a pair of power conductors extending therealong and configured to supply electrical energy and a pair of signal conductors extending therealong and configured to convey signals; and a plurality of zone modules connectable to and receiving electrical energy from said track, each of the zone modules being associated with a respective one of the zones and being configured to couple a respective temperature set-point switch of its zone to a respective zone valve of its zone such that said respective zone valve is powered to open upon receiving a valve-actuation signal from said respective temperature set-point switch, and each of the zone modules being configured to couple a respective end switch of the respective zone valve of its zone to said signal conductors for conveying call to a heat/cold signal therealong when said respective zone valve is fully open.
(25) The assembly of clause 24 wherein at least some of the temperature set-point switches are thermostats.
(26) The assembly of any one of clauses 24 and 25 wherein at least some of the temperature set-point switches are aquastats.
(27) A hydronic system for a plurality of zones, the system comprising: a wiring track including a pair of power conductors supplying electrical energy therealong and a pair of signal conductors, the signal conductors being in communication with a heat/cold source; and a means for electrically coupling thermostats and zone valves of the respective one of the zones together for selectively heating/cooling said respective ones of said zones.

It will be appreciated that many variations are possible within the scope of the invention described herein. It will be understood by someone skilled in the art that many of the details provided above are by way of example only and are not intended to limit the scope of the invention which is to be determined with reference to at least the following claims.

## Claims

1. A modular track wiring assembly for a hydronic system, a first zone thereof having a zone temperature, the first zone including a temperature-sensing device which outputs a valve-actuation signal upon the zone temperature deviating from a threshold temperature range and the first zone including a zone valve having an end switch which outputs a call for heat/cold signal when the zone valve is fully open, the assembly comprising:
an elongate track including a pair of power conductors extending therealong, the power conductors being configured to supply electrical energy, and a pair of signal conductors extending therealong, the signal conductors being configured to convey signals; and
a zone module connectable to and receiving electrical energy from said track, the zone module connecting the temperature-sensing device to the zone valve such that the zone valve is powered to open upon receiving said valve-actuation signal, and the zone module connecting the end switch to said signal conductors for conveying a call for heat/cold signal when said zone valve is fully open.

2. The assembly as claimed in claim 1, the hydronic system including an additional zone having a temperature-sensing device, a zone valve and an end switch, and wherein the assembly includes an additional zone module connectable to and receiving electrical energy from said track, the additional zone module connecting the temperature-sensing device of the additional zone to the zone valve of the additional zone such that the zone valve of the additional zone is powered to open upon receiving a valve-actuation signal from the temperature-sensing device of the additional zone, and the additional zone module connecting the end switch of the zone valve of the additional zone to said signal conductors for conveying a call for heat/cold signal therealong when said zone valve of the additional zone is fully open.

3. The assembly as claimed in claim 1, wherein the zone module is a first zone module associated with the first zone, the track is a first track, the system includes a second zone having components substantially similar to the first zone, and the assembly further includes:
a second zone module substantially similar to the first zone module and being associated with the second zone;
a second track substantially similar to the first track and to which the second zone module is connectable and receives electrical energy therefrom; and
a pair of power modules connectable to respective ones of the tracks, the power modules being configured to connect respective ones of the power and signal conductors of the tracks together.

4. The assembly as claimed in claim 1, wherein the zone module is a first zone module associated with the first zone, the track is a first track, the system includes a second zone having components substantially similar to the first zone, and the assembly further includes:
a second zone module substantially similar to the first zone module and being associated with the second zone;
a second track substantially similar to the first track and to which the second zone module is connectable and receives electrical energy therefrom; and
a power module having a first plurality of leads connectable to a first of the tracks and a second plurality of leads connectable to a second of the tracks, the second plurality of leads being electrically connected to respective ones of the first plurality of leads, and the power module being configured to connect together the tracks and respective ones of the power and signal conductors of the tracks.

5. The assembly as claimed in claim 1, the temperature-sensing device being a two-stage thermostat which outputs an additional valve-actuation signal should the zone temperature deviate from the threshold temperature range after a set amount of time, the zone including an additional zone valve, and wherein the zone module is a two-stage zone module configured to connect the temperature-sensing device to the additional zone valve such that the additional zone valve is powered to open upon receiving said additional valve-actuation signal.

6. The assembly as claimed in claim 1, the temperature-sensing device being a two-stage thermostat which outputs a call for additional heating/cooling signal should the zone temperature deviate from the threshold temperature after a set amount of time, and wherein the zone module is a two-stage zone module being configured to energize a relay for operating an additional heating/cooling unit upon receiving said additional heating/cooling signal.

7. The assembly as claimed in any one of claims 1 to 6, further including a relay module selectively connectable to said track, the relay module including a first pair of normally open terminals connectable to a heat/cold source of the system, a second pair of normally open terminals connectable to a circulating pump of the zone, and a relay activated by said call for heat/cold signal, the relay so activated causing said first pair of terminals to connect together for activating the heat/cold source and causing said second pair of terminals to connect together for actuating the pump.

8. The assembly as claimed in any one of claims 1 to 7, the hydronic system having a priority zone and a prioritized circulating pump, and the assembly further including a priority relay module selectively connectable to said track, the priority relay module including a first pair of normally open terminals connectable to a primary heat/cold source of the system, a second pair of normally open terminals connectable to a circulating pump of the zone, a third pair of normally open terminals connectable to a backup heat/cold source of the system, a fourth pair of normally open terminals connectable to the prioritized circulating pump of the priority zone, a first relay activated by said call for heat/cold signal, the first relay so activated being configured to cause the priority relay module to connect respective ones of the power conductors to respective ones of the signal conductors, cause said first pair of terminals to connect together for actuating the heat/cold source and cause said second pair of terminals to connect together for actuating the pump, and a second relay activated by an external device of the system, the second relay so activated being configured to cause the first and second pair of terminals to open and cause the third and fourth pairs of terminals to close for activating said backup heat/cold source.

9. The assembly as claimed in any one of claims 1 to 8, wherein the temperature sensing device is one of a thermostat and an aquastat and further including a transformer module connectable to said track, the transformer module connectable to a high voltage source and including a transformer configured to transform a high input voltage from said high voltage source to a low output voltage and supply the power conductors of the track with electrical energy having said low output voltage thereafter.

10. A hydronic system comprising:
at least one zone having a zone temperature, including a temperature-sensing device which outputs a valve-actuation signal upon said zone temperature deviating from a threshold temperature range, and including a zone valve having an end switch which outputs a call for heat/cold signal when the zone valve is fully open; and
the modular track wiring assembly as claimed in claim 1.

11. A hydronic system for a plurality of zones, the system comprising:
a wiring track including a pair of power conductors supplying electrical energy therealong and a pair of signal conductors, the signal conductors being in communication with a heat/cold source; and
a plurality of zone modules, each corresponding to respective ones of said zones, including leads which connect to respective ones of the conductors, and including terminals and conductors configured to selectively connect respective thermostats and zone valves of their respective one of the zones together, receive signals therefrom and convey said signals via the signal conductors to the heat/cold source for selectively heating/cooling said respective ones of said zones.

12. A modular track for a hydronic system, the track being elongate and planar and comprising:
a pair of spaced-apart power conductors for supplying electrical energy, the power conductors being connectable to an electrical power source; and
a pair of signal conductors, the signal conductors being configured to receive mechanical/thermal control signals from a plurality of zones and convey said signals to a heat/cold source actuator.

13. A modular track wiring assembly for a hydronic system, a zone thereof having a zone temperature and including a temperature-sensing device which outputs a pump actuation signal upon the zone temperature deviating from a threshold temperature range, the assembly comprising:
an elongate track including a pair of power conductors extending therealong and configured to supply electrical energy; and
a pump module connectable to and receiving electrical energy from said track, the module including a pair of normally-open terminals connectable to a circulating pump and a relay activated by said pump actuation signal, whereby actuation of the relay causes the terminals to close for actuating the circulating pump.

14. A modular track wiring assembly for a hydronic system having multiple zones, the assembly comprising:
an elongate track including a pair of power conductors extending therealong and configured to supply electrical energy and a pair of signal conductors extending therealong and configured to convey signals; and
a plurality of zone modules connectable to and receiving electrical energy from said track, each of the zone modules being associated with a respective one of the zones and being configured to couple a respective temperature set-point switch of its zone to a respective zone valve of its zone such that said respective zone valve is powered to open upon receiving a valve-actuation signal from said respective temperature set-point switch, and each of the zone modules being configured to couple a respective end switch of the respective zone valve of its zone to said signal conductors for conveying call to a heat/cold signal therealong when said respective zone valve is fully open.

15. A hydronic system for a plurality of zones, the system comprising:
a wiring track including a pair of power conductors supplying electrical energy therealong and a pair of signal conductors, the signal conductors being in communication with a heat/cold source; and
a means for electrically coupling thermostats and zone valves of the respective one of the zones together for selectively heating/cooling said respective ones of said zones.
